# EUROPEAN PATENT APPLICATION

(11) **EP 1 521 404 A2**
(43) Date of publication of application: **06.04.2005**
(21) Application number: 04255996.3
(22) Date of filing: 29.09.2004
(51) Int. Cl.: H04L 12/407

(54) **Data transmission system, terminal device, data transmission method, and recording medium**

(30) Priority: 03.10.2003 JP 2003345616
(71) Applicant: Sony Corporation, Tokyo 141-0001 (JP)
(72) Inventor: Hiramatsu, Tamihei, c/o Sony Corporation, Tokyo (JP)
(74) Representative: Mills, Julia

(57) **Abstract**

The present application transmits significant data unidirectionally among a plurality of terminal apparatuses and causes a terminal apparatus at the downstream end of a transmission path to collect the significant data. Each terminal apparatus includes a data detection section for detecting whether or not significant data written at another terminal apparatus located toward the upstream side of the transmission path is received, and also includes a data selection section for transferring the significant data as is to a downstream terminal apparatus when the reception of the significant data is detected or outputting significant data generated within the terminal apparatus to a downstream terminal apparatus when the reception of the significant data is not detected.

## Description

The present invention relates to a data transmission system and a terminal apparatus

The present invention also relates to a data transmission method

The present invention further relates to a recording medium for storing a program for data transmission.

Various data transmission systems are used depending on the purpose. For example, some data transmission systems cause one dedicated device to collect data that are generated at various terminal apparatuses. This type of a data transmission system collects all the necessary data by repeating a polling or other individual selection type communication operation. If data processing is required, this type of a data transmission system collects data from all terminal apparatuses and then performs a selection or arithmetic processing operation as needed.

### Reference Cited

Patent Document 1: Japanese Patent Laid-open No. 1995-219867

However, the former method repeats an individual communication operation. Therefore, it takes a considerable amount of time to collect necessary data. A further method provides a data transmission band for each terminal device. Therefore, the resulting transmission band for the overall system is very wide. In addition, the transmission band increases in proportion to an increase in the number of terminal apparatuses, and the time required for collecting data from all terminal apparatuses increases accordingly.

The present invention seeks to solve or at least alleviate at least one of the above problems.

Various respective aspects of the present invention are set out in the appended claims.

The invention will now be described by way of example with reference to the accompanying drawings, throughout which like parts are referred to by like references, and in which:

### BRIEF DESCRIPTION OF THE DRAWINGS

FIG. 1 schematically illustrates the configuration of a transmission system according to one embodiment of the present invention (series connection example);
FIG. 2 shows a typical configuration of a data processing section that provides upstream-preferred type data transmission;
FIG. 3 shows the style of upstream-preferred type data transmission;
FIG. 4 shows a typical configuration of a data processing section that provides downstream-preferred type data transmission;
FIG. 5 shows the style of downstream-preferred type data transmission;
FIG. 6 shows a typical configuration of a data processing section that provides totalization type data transmission;
FIG. 7 shows the style of totalization type data transmission;
FIG. 8 schematically illustrates the configuration of a transmission system according to one embodiment of the present invention (loopback function incorporated connection example);
FIG. 9 shows a typical configuration of a terminal apparatus having a loopback function;
FIG. 10 illustrates the procedure for exercising a processing path loopback function;
FIG. 11 illustrates the procedure for exercising a relay path loopback function;
FIGS. 12A, 12B, and 12C show typical connection styles that are applicable to a terminal device;
FIG. 13 schematically illustrates the configuration of a transmission system according to one embodiment of the present invention (loop connection example);
FIG. 14 shows a typical system to which a data selection function based on the order of priority is applied;
FIG. 15 shows a typical system to which a group-specific totalization function is applied;
FIG. 16 shows a typical system to which a data-type-specific totalization function is applied;
FIGS. 17A 17B 17C and 17D show a typical transmission data structure;
FIG. 18 shows a typical internal configuration of a terminal device;
FIG. 19 shows a typical internal configuration of a sender/receiver block;
FIG. 20 shows a typical internal configuration of a timing control section;
FIG. 21 shows a typical internal configuration of a data processing block (for write system analog input);
FIG. 22 shows a typical internal configuration of a data processing block (for write system digital input);
FIG. 23 shows a typical internal configuration of a data processing block (read system);
FIGS. 24A and 24B show typical output pulses of a pulse train generation circuit (low pulse density);
FIGS. 25A and 25B show typical output pulses of a pulse train generation circuit (low pulse density);
FIG. 26 shows a typical internal configuration of a mouse circuit;
FIG. 27 illustrates the relationship between a count and load timing;
FIGS. 28A 28B and 28C illustrate a loopback control scheme;
FIG. 29 shows a typical configuration of a loopback control section;
FIG. 30 is a flowchart illustrating the processing operations that are performed by a clock master terminal device;
FIG. 31 is a timing diagram illustrating the operations that are performed by a clock master terminal device;
FIG. 32 is a flowchart illustrating the processing operations that are performed by a non-clock master terminal device; and
FIG. 33 is a timing diagram illustrating the operations that are performed by a non-clock master terminal device.

A data transmission system and terminal apparatus according to embodiments of the present invention will now be described

. For portions not depicted or otherwise described in this specification, relevant publicly known technologies are adopted.

The subsequent description assumes that the preferred embodiments are implemented by hardware. However, the preferred embodiments can also be implemented by a software process that is equivalent to the hardware. The storage medium applicable to embodiments of the present invention may be, for instance, a magnetic disk (flexible disk or hard disk), magnetic tape, or other similar magnetic storage medium, an optical disk, optical tape, machine-readable barcode, or other similar optical storage medium, a random-access memory (RAM), read-only memory (ROM), or other similar semiconductor storage device, or other physical device or medium for computer program storage.

When embodiments of the present invention are implemented by hardware, they can be implemented by an application-specific integrated circuit (ASIC) or other similar integrated circuit or relevant publicly known device.

### a) First embodiment

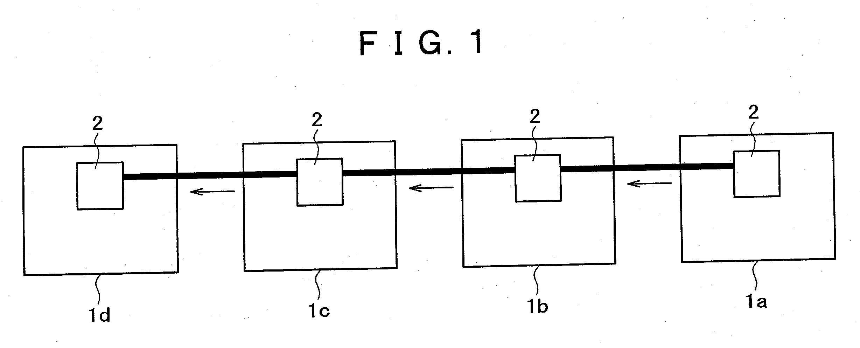

One Embodiment of the present invention provides a plurality of terminal apparatuses that share a transmission band for a single unit to transmit significant data that is generated in one high-priority terminal device. FIG. 1 shows a typical system. In the system shown in FIG. 1, four terminal apparatuses 1, which are configured in the same manner, are series-connected (linearly connected). Significant data generated by each terminal apparatus is unidirectionally transmitted from the upstream side of a transmission path to the downstream side.

In FIG. 1, terminal apparatus 1a is at the upstream end, whereas terminal apparatus 1d is at the downstream end. In the system, therefore, significant data is sequentially transmitted from terminal apparatus 1a to terminal apparatus 1b, terminal apparatus 1c, and terminal apparatus 1d, and collected significant data is output from terminal apparatus 1d, which is at the downstream end.

The system uses a transmission path that is common to all the terminal apparatuses, and unidirectionally transfers only the significant data of a high-priority terminal device.

This eliminates the necessity for establishing individual communication with a terminal apparatus that has not generated significant data and the necessity for establishing individual communication with a terminal apparatus generating significant data that will not eventually be used. It is therefore possible to minimize or at least reduce the transmission band. It is also possible to avoid or at least reduce the use of extra communication time when a specific amount of data is to be collected.

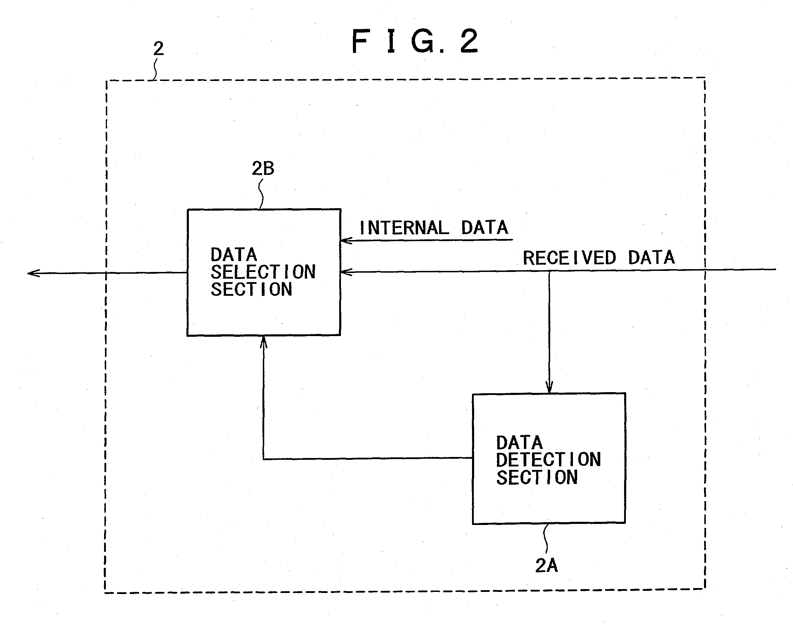

In another embodiment of the present invention the order of priority is determined according to the terminal apparatus connection location. For example, priority is given to terminal apparatuses positioned on the upstream side of the transmission path. The associated function is exercised by a data processing section 2, which is built in each terminal apparatus 1. FIG. 2 shows a typical configuration of the data processing section 2. The data processing section 2 has a data detection section 2A and a data selection section 2B.

The data detection section 2A checks whether significant data written in another terminal apparatus located upstream is received. The significant data includes audio data, video data, character data (text data), numerical data (e.g., control data, measurement data, and selection data), and a combination of these.

When the reception of significant data is detected, the data selection section 2B transfers the received significant data as is to a downstream terminal device. When, on the other hand, the reception of significant data is not detected, the data selection section 2B outputs significant data generated within the terminal apparatus to a downstream terminal device. If zero data is written as significant data, the data selection section 2B assumes that the reception of significant data is not detected. The zero data is defined as data that contains no significant data to be transmitted. The zero data also includes flag data and the like.

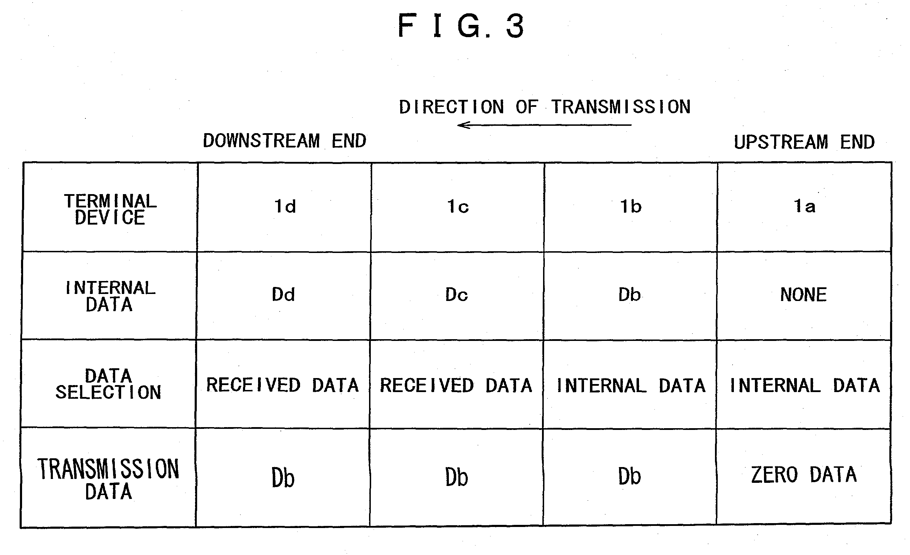

FIG. 3 shows an example of significant data transmission in the above case. In the situation shown in FIG. 3, significant data is generated in terminal apparatuses 1b, 1c, and 1d whereas no significant data is generated in terminal apparatus 1a. Terminal apparatus 1a, which is at the upstream end, does not receive data. Therefore, the device 1a enters a mode for selecting internally generated significant data. In the example shown in the figure, however, there is no significant data for transmission; therefore, zero data is written and output to the transmission path.

Terminal apparatus 1b, which is positioned next to terminal apparatus 1a, does not detect the reception of significant data from terminal apparatus 1a, which is positioned upstream of terminal apparatus 1b. Therefore, terminal apparatus 1b also enters a mode for selecting internally generated significant data. However, terminal apparatus 1b has significant data Db (≠ 0) to transmit. Therefore, the data is written and output.

Terminal apparatus 1c, which is positioned next to terminal apparatus 1b, detects the reception of significant data Db. Therefore, terminal apparatus 1c transfers received significant data as is to the next stage. Terminal apparatus 1d, which is at the downstream end, detects significant data Db. Therefore, terminal apparatus 1d enters a mode for transferring received significant data Db as is. Terminal apparatus 1d outputs collected significant data to the outside as needed.

The above-mentioned transmission operation is repeatedly performed for each period, which is a unit of transmission. The connections among terminal apparatuses 1a through 1d may be either hard wired or wireless. When they are wirelessly connected, the order of transmission should be predetermined for the terminal apparatuses so that the employed connection scheme is the same as that for hard wired connections. A typical transmission method for the terminal apparatuses is serial transmission or parallel transmission.

### (b) Second embodiment

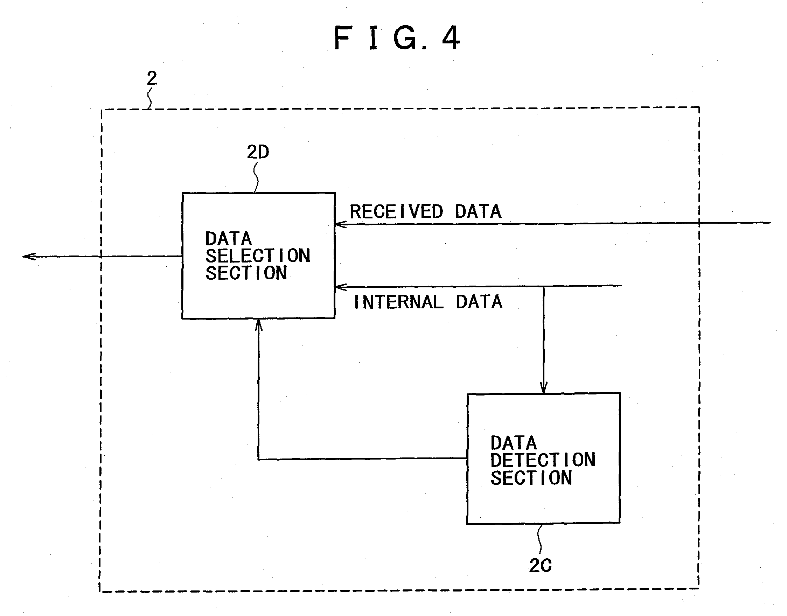

The order of priority may also be determined in such a manner as to give priority to the downstream side of the transmission path. In such an instance, each terminal apparatus overwrites its own significant data and transfers it to the next terminal device. FIG. 4 shows a typical configuration of the data processing section 2 that implements such a function. The data processing section 2 has a data detection section 2C and a data selection section 2D.

The data detection section 2C detects whether significant data generated within the terminal apparatus exists. Unlike data detection section 2A, which is described earlier, data detection section 2C checks for the existence of internal data.

When the existence of significant data is detected, the data selection section 2D replaces received significant data with the detected significant data and outputs the detected significant data to a downstream terminal device. If, on the other hand, the existence of significant data is not detected, the data selection section 2D transfers the received significant data as is to a downstream terminal device.

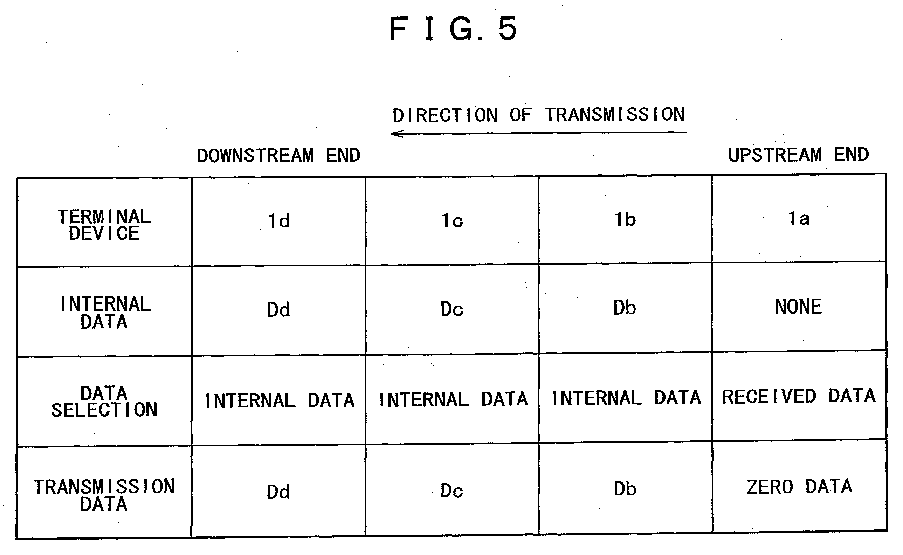

FIG. 5 shows an example of significant data transmission in the above case. In the situation shown in FIG. 5, significant data is generated in terminal apparatuses 1b, 1c, and 1d whereas no significant data is generated in terminal apparatus 1a. Terminal apparatus 1a, which is at the upstream end, has no internal data for transmission. Further, it has no upstream significant data for transfer. Therefore, terminal apparatus 1a writes and outputs zero data as significant data.

Terminal apparatus 1b, which is positioned next to terminal apparatus 1a, detects the existence of significant data that is generated within the terminal device. Therefore, terminal apparatus 1b writes and outputs significant data Db (≠ 0). This also holds true for terminal apparatus 1c, which is positioned next to terminal apparatus 1b. More specifically, terminal apparatus 1c replaces the significant data Db of the preceding terminal apparatus with its own significant data Dc, and outputs its own significant data Dc. Similarly, terminal apparatus 1d, which is at the downstream end, replaces the significant data Dc of the preceding terminal apparatus with its own significant data Dd. Terminal apparatus 1d outputs collected significant data to the outside as needed. This transmission operation is also repeatedly performed for each period, which is a unit of transmission.

The order of priority may also be determined without regard to the terminal apparatus connection locations. For example, each terminal apparatus may be assigned a specific numerical value that defines the order of priority. When significant data is to be transmitted, such a numerical value may be attached to the data. In such an instance, each terminal apparatus may not only detect the presence of significant data or internal data, but also check the attached numerical value to determine the priority level of significant data and decide whether the significant data should be written or transferred.

### (c) Third embodiment

In another embodiment of the present invention, significant data received by each terminal apparatus is arithmetically processed and the obtained processing result is transferred. It means that a necessary arithmetic process is already completed when the significant data is collected. The transmission band for one terminal apparatus is required for each terminal device. In marked contrast to a situation where conventional devices are used, the transmission band covering all the terminal apparatuses is not required.

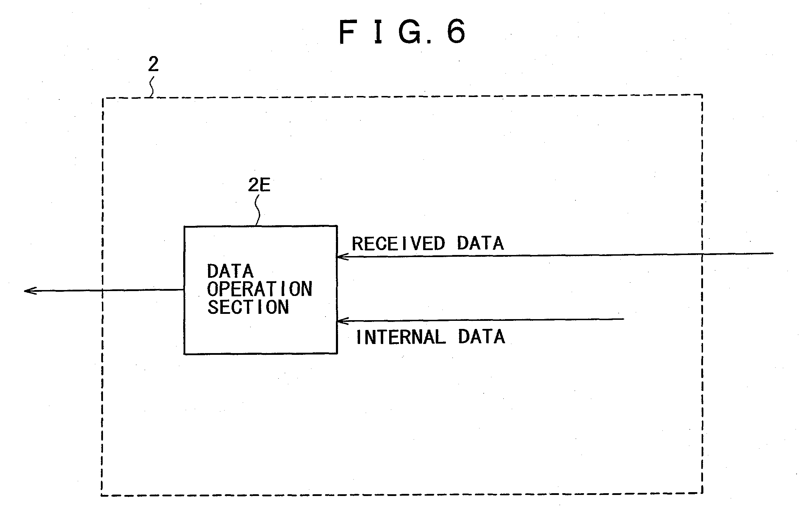

FIG. 6 shows a typical configuration of the data processing section 2 that implements the above function. The data processing section 2 includes a data operation section 2E, which causes an operator to act on received significant data and significant data generated within the terminal device, and outputs the obtained operation result to a downstream terminal device. The operators to be employed provide addition, subtraction, multiplication, and division. A combination of these operators, function, or the like are called operators.

It is preferred that the data operation section 2E operate on significant data on an individual data type basis. In such an instance, terminal apparatus 1d, which is at the downstream end, collects the results of computations that are performed on significant data of all terminal apparatuses on an individual data type basis. For example, typical data types may be selectable options, which are provided when the significant data is selection data. Another data type may be the ith coordinates (1 ≤ i ≤ n), which are provided when the significant data is n-dimensional coordinate data. Another data type may be the ith component (1 ≤ i ≤ n), which is provided when the significant data represents the amount of change in n-dimensional space. Still another data type may be values, which are provided when the significant data are given as a set of one positive value and one negative value.

It is also preferred that the data operation section 2E operate on significant data on an individual terminal apparatus group basis. In such an instance, terminal apparatus 1d, which is at the downstream end, collects the results of significant data totalization on an individual group basis. For example, typical terminal apparatus groups may include even-numbered terminal apparatuses and odd-numbered terminal apparatuses, which are numbered beginning with the upstream end. The other typical terminal apparatus groups may be terminal apparatuses attended by females and terminal apparatuses attended by males. The relationship between the sections of the significant data and the groups should be predefined. Further, it is preferred that a switch or the like be used to predefine the relationship between the terminal apparatuses and groups.

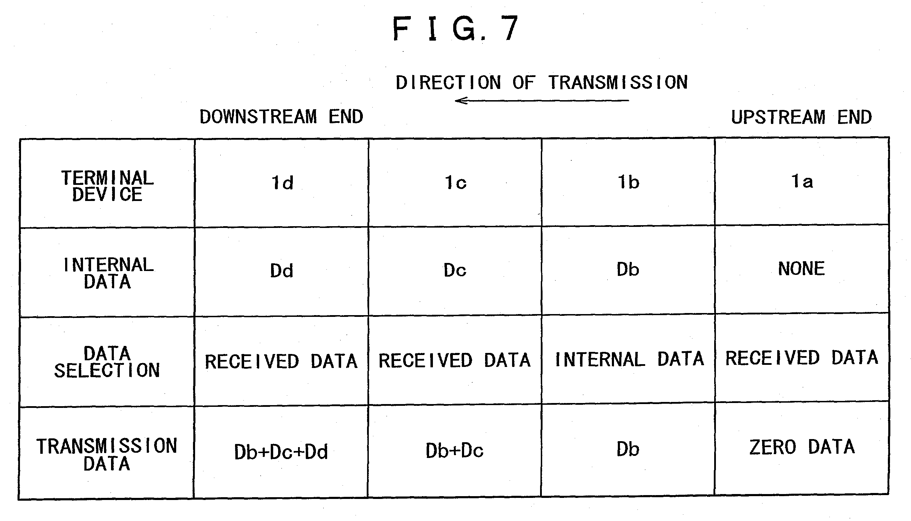

Further, it is preferred that the data operation section 2E add significant data generated within the terminal apparatus to received significant data and output the addition result. In such an instance, terminal apparatus 1d, which is at the downstream end, obtains the sum of significant data of all terminal apparatuses as the totalization result. FIG. 7 shows an example of significant data transmission in the above case. In the situation shown in FIG. 7, significant data is generated in terminal apparatuses 1b, 1c, and 1d whereas no significant data is generated in terminal apparatus 1a.

Terminal apparatus 1a, which is at the upstream end, has no internal data for transmission. Further, it has no upstream significant data for transfer. Therefore, terminal apparatus 1a writes and outputs zero data as significant data.

Terminal apparatus 1b, which is positioned next to terminal apparatus 1a, detects the existence of significant data that is generated within the terminal device. Therefore, terminal apparatus 1b writes and outputs significant data Db (≠ 0). This also holds true for terminal apparatus 1c, which is positioned next to terminal apparatus 1b. Terminal apparatus 1c adds it own significant data Dc to received significant data Db and outputs the addition result Db + Dc to the next terminal device.

Terminal apparatus 1d, which is at the downstream end, similarly adds its own significant data Dd to the significant data Db + Dc of the preceding terminal device, and acquires the addition result. Terminal apparatus 1d outputs the addition result to the outside as needed. This transmission operation is also repeatedly performed for each period, which is a unit of transmission.

### (d) Fourth embodiment

A further embodiment of the present invention is a data transmission system, which, in a situation where a plurality of terminal apparatuses are connected via a transmission path in such a manner as to form a loop, transmits significant data on the presumption that an arbitrarily selected one of a plurality of terminal apparatuses is positioned at the downstream end of the transmission path, and that a terminal apparatus positioned next to the above terminal apparatus is positioned at the upstream end of the transmission path.

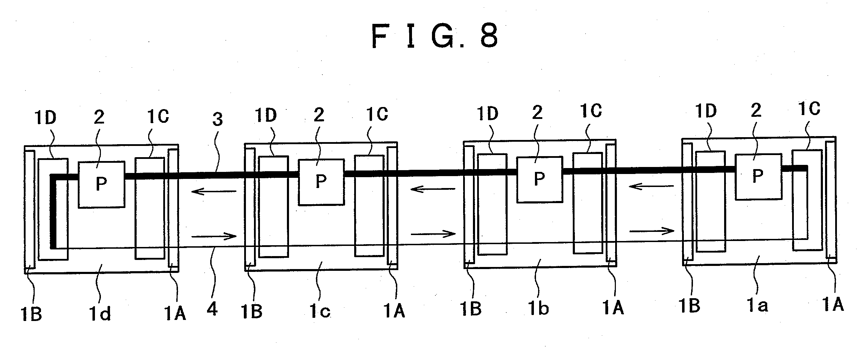

FIG. 8 shows an example of the above-mentioned data transmission system. The system forms a loop transmission path by using a processing path 3, which corresponds to the transmission path of the foregoing embodiments of the present invention, and a relay path 4, which serves as a return transmission path for the processing path 3. The processes performed within the terminal apparatuses are the same as described in conjunction with the foregoing embodiments of the present invention. In other words, the significant data write operation and transfer operation are controlled in accordance with the priority level or each terminal apparatus performs an arithmetic process and transmits data to the next terminal device.

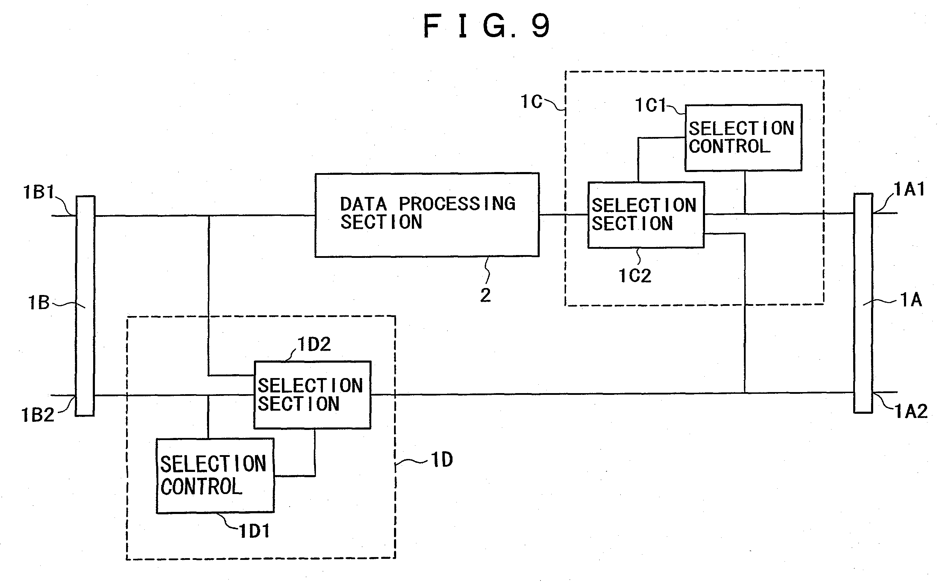

FIG. 9 shows a typical terminal apparatus that provides the above-mentioned connection. The terminal apparatus shown in FIG. 9 has a transmission path automatic termination function, that is, a path automatic loopback function. The transmission technology described above is also applicable to a situation where a termination process is manually performed.

The terminal apparatus 1 shown in FIG. 9 includes two input/output interfaces 1A and 1B, two path selection selections 1C and 1D, and the aforementioned data processing section 2.

Input/output interface 1A has a data input section 1A1 for a processing path and a data output section 1A2 for a relay path, and serves as a device for connecting to an external terminal device. Input/output interface 1B has a data output section 1b1 for a processing path and a data input section 1B2 for a relay path, and serves as a device for connecting to an external terminal device.

If, for instance, the terminal apparatuses are to be interconnected with one cable, data input sections 1A1 and 1B2 and data output sections 1A2 and 1B1 constitute an interface that corresponds to a signal line within the cable.

If, for instance, the terminal apparatuses,are to be wirelessly interconnected, data input sections 1A1 and 1B2 and data output sections 1A2 and 1B1 constitute an interface that transmits/receives the associated channel information.

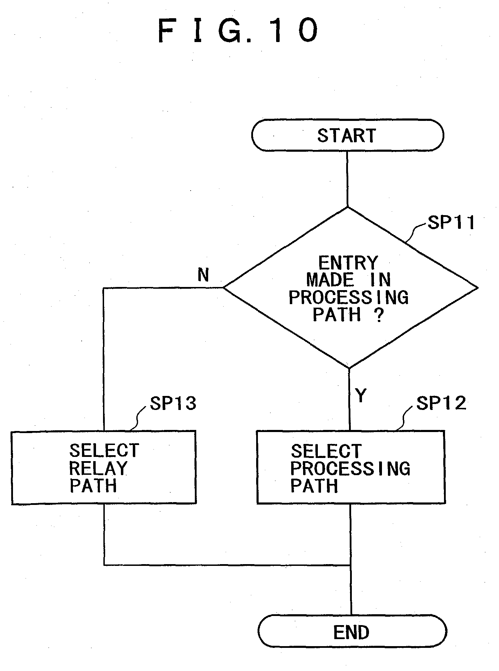

Path selection section 1C is a functional section that monitors processing path data input section 1A1 to check whether a processing path input is output from another terminal device. FIG. 10 shows the associated processing sequence. First of all, path selection section 1C checks for a processing path input (step SP11). If a processing path input is detected, path selection section 1C selects the associated processing path (step SP12). If, on the other hand, no processing path input is detected, path selection section 1C selects a relay path (step SP13). This function can be implemented, for instance, by selection control section 1C1 and selection section 1C2.

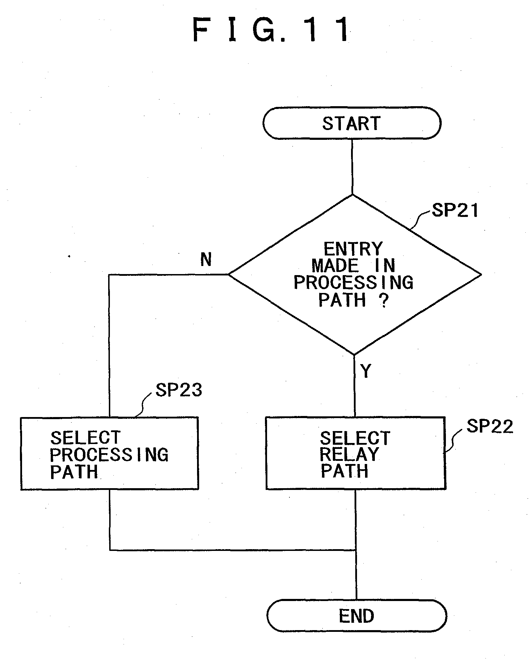

Path selection section 1D is a functional section that monitors relay path data input section 1B2 to check whether a relay path input is output from another terminal device. FIG. 11 shows the associated processing sequence. Path selection section 1D checks for a relay path input (step SP21). If a relay path input is detected, path selection section 1D selects the associated relay path (step SP22). If, on the other hand, no relay path input is detected, path selection section 1D selects a processing path (step SP23). This function can be implemented, for instance, by selection control section 1D1 and selection section 1D2.

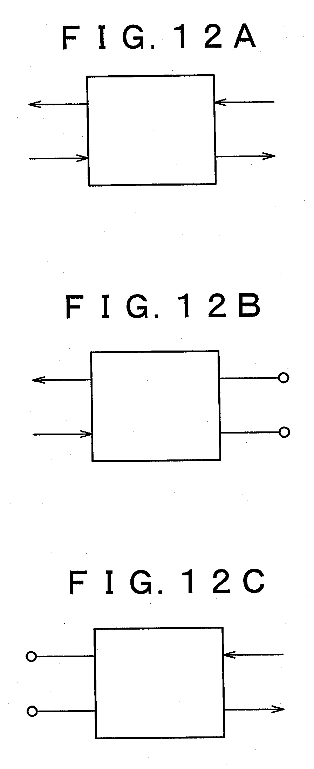

Path selection sections 1C and 1D provide automatic path loopback at both ends of the data transmission system. FIGS. 12A, 12B, and 12C illustrate a process that is performed for automatic path loopback. When the employed data transmission system is as shown in FIG. 8, the terminal apparatus connection can be classified into three types, which are shown in FIGS. 12A, 12B, and 12C.

FIG. 12A shows a configuration in which remote terminal apparatuses are connected to both ends of a local terminal device. In the case shown in FIG. 8, two terminal apparatuses are connected in this manner. In this instance, path selection sections 1C and 2D can both detect an input path. Therefore, path selection section 1C selects a processing path that is output from the preceding terminal device. Path selection section 1D selects a relay path that is output from the preceding terminal device.

FIG. 12B shows a configuration in which no remote terminal apparatus is connected to input/output interface 1A. In the case shown in FIG. 8, one terminal apparatus is connected in this manner. In this instance, path selection section 1C, which checks for a processing path input, cannot detect a processing path input. Therefore, the section 1C selects a relay path that is received from another terminal device. This ensures that the relay path loops back within the terminal apparatus and is given to data processing section 2 as a processing path.

FIG. 12C shows a configuration in which no remote terminal apparatus is connected to input/output interface 1B. In the case shown in FIG. 8, one terminal apparatus is connected in this manner. In this instance, path selection section 1D, which checks for a relay path input, cannot detect a relay path input. Therefore, the section 1D selects a processing path that is output from data processing section 1C. This ensures that the processing path loops back within the terminal apparatus and is transferred to the next terminal apparatus as a relay path.

As described above, automatic path loopback occurs in terminal apparatuses that are positioned at both ends of the system. Therefore, the system installation personnel simply has to connect the terminal apparatuses in series. If the employed system configuration uses a processing path and a relay path to form a single logic loop, the system contains only one FIG. 12B connection no matter whether a diverging device provides a plurality of branch paths.

Data processing section 2 is a functional section that processes data received via processing path input section 1A1. Data processing section 2 is configured as indicated in FIGS. 2, 4, and 6. Data processing section 2 can be implemented either by hardware or as software functionality.

### (e) Fifth embodiment

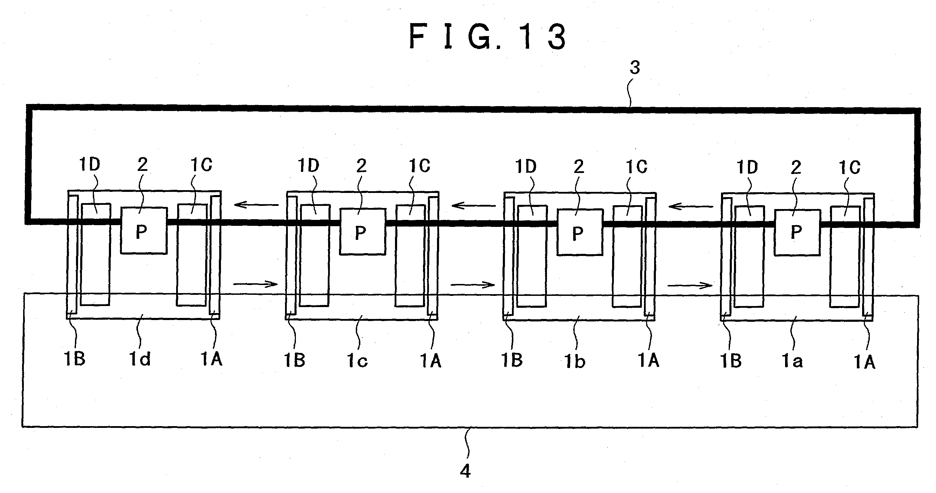

For example, the system configuration for establishing a transmission path connection in such a manner as to form a loop may be as shown in FIG. 13. In the system shown in FIG. 13, four terminal apparatuses, which are configured in the same manner, are interconnected via two input/output interfaces 1A, 1B. However, the system shown in FIG. 13 interconnects the terminal apparatuses so as to form a physical loop. In the example shown in FIG. 8, on the other hand, the terminal apparatuses are linearly interconnected.

In the configuration shown in FIG. 13, the connection between processing path data input section 1A1 and data output section 1B1 forms a first loop, and the connection between relay path data input section 1B2 and data output section 1A2 forms a second loop.

Logically, this system forms a dual loop. If the connections among the terminal apparatuses are normal, the processing path loop operates as a current system, whereas the relay path loop operates a redundant system. If a connection abnormality occurs at any location within these system, the terminal apparatuses positioned on both sides of the disconnected part switch to the states shown in FIGS. 12B and 12C. Therefore, an automatic path loopback occurs in the terminal apparatuses so that the system operates as indicated in FIG. 8.

In still a further embodiment of the present invention, a minimum transmission band (data transmission amount) is adequate for enabling a terminal apparatus at the downstream end to collect necessary significant data even when many terminal apparatuses are interconnected. This ensures that the data rate (resulting amount of data that can be obtained per unit time) does not depend on the number of terminal apparatuses.

### (a) Applications

Embodiments of terminal apparatuses 1 will now be described as embodiments of terminal apparatuses 10. The embodiments will be described below with reference to applications based on the basic functions of the terminal apparatus 10 and with reference to applications based on the combinations of the basic functions. The terminal apparatuses 10 need not be installed within the same space as far as the aforementioned connections can be established.

### (a-1) First application

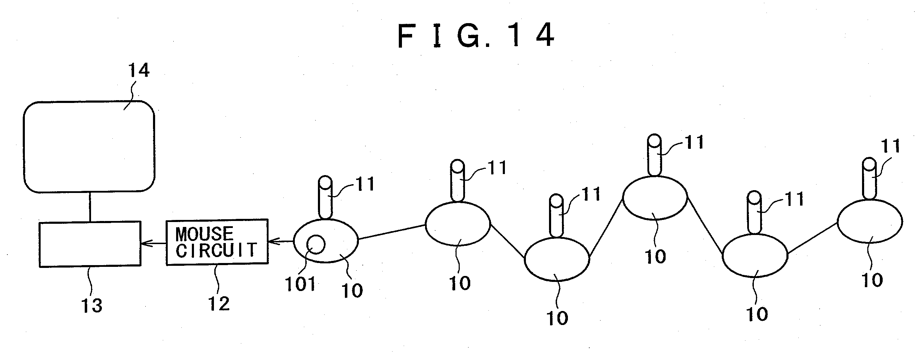

FIG. 14 shows an application that is based on a data selection function, which is exercised according to the order of priority. The data transmission system shown in FIG. 14 transmits displacement data (two-dimensional data), which is entered with a joystick, mouse, or other pointing device, as significant data. This data transmission system includes terminal apparatuses 10, joysticks 11, a mouse circuit 12, a computer 13, and a display device 14.

In the above application, the terminal apparatus 10 connected to the downstream end needs to have a processing function that differs from the processing functions of the other terminal apparatuses 10 on the upstream side. More specifically, the terminal apparatus 10 connected to the downstream end needs to incorporate a function for generating a pulse train (pulses/second) proportional to X and Y values from XY data generated by a joystick 11.

In the present embodiment, a circuit block 101 for implementing the function of the terminal apparatus 10 at the downstream end is incorporated. The same configuration may be applied to all terminal apparatuses 10. If all the terminal apparatuses 10 are configured in the same manner, it is not necessary to worry about the location of the terminal apparatus 10 having the circuit block 101. The circuit block may be mounted in the mouse circuit 12.

The circuit block 101 generates the same pulse train (that is, a pseudo-wheel pulse train) as a mouse, which is a known pointing device. The mouse circuit 12 converts the pseudo-wheel pulse train to a known mouse output. In other words, the circuit block 101 and mouse circuit 12 constitute a known mouse. The configuration of the circuit block 101 will be described later in detail.

Therefore, when the above system configuration is used, a plurality of participants can operate the mouse of the computer 13 while being seated and without modifying the software and hardware of the computer 13 at all. In other words, the participants do not have to change seats when they speak so that the proceedings can be smoothly expedited. Further, it is not necessary to prepare a laser pointer or other similar optical device for use by a speaker. In this sense, the above system configuration is suitable for a presentation system and conference system.

### (a-2) Second application

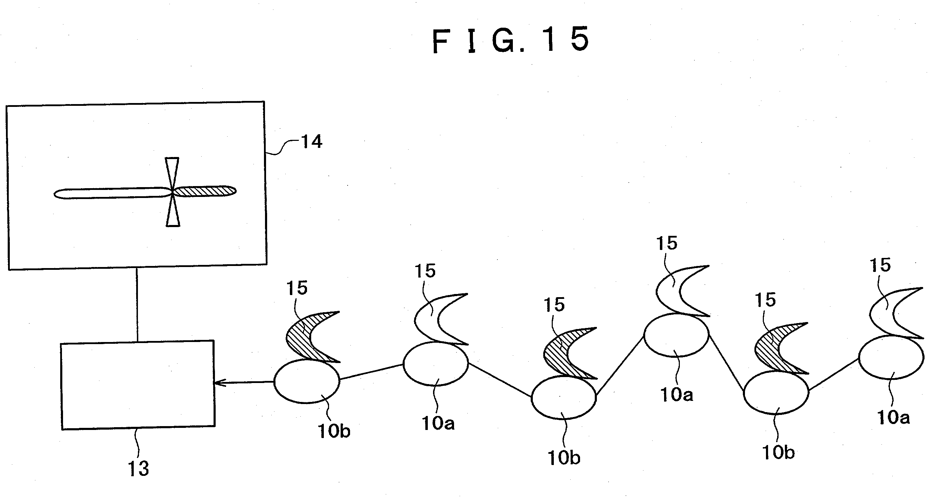

FIG. 15 shows an application based on a totalization function that is exercised on an individual group basis. In the example shown in FIG. 15, measured data are totalized on an individual group basis and displayed on the display device 14 while a grip dynamometer is used as an input device. In this example, the terminal apparatuses are divided into group A (terminal apparatuses 10a) and group B (terminal apparatuses 10b) to add up measured data. Since the total value is output from the terminal apparatus 10b at the downstream end, the output value should be displayed as is. In the example shown in FIG. 15, the output value appears on the display device 14 via the computer 13.

If the terminal apparatus at the downstream end incorporates a necessary interface, the total value can be given to the display device 14.

In the example shown in FIG. 15, the total values of groups A and B are displayed on the screen in a manner similar to tug-of-war. The figure indicates that group A is superior to group B. Alternatively, a bar graph may be generated to indicate the total value of each group. Another alternative is to display the total values. This total value display scheme can be used, for instance, with a group participation type game system.

### (a-3) Third application

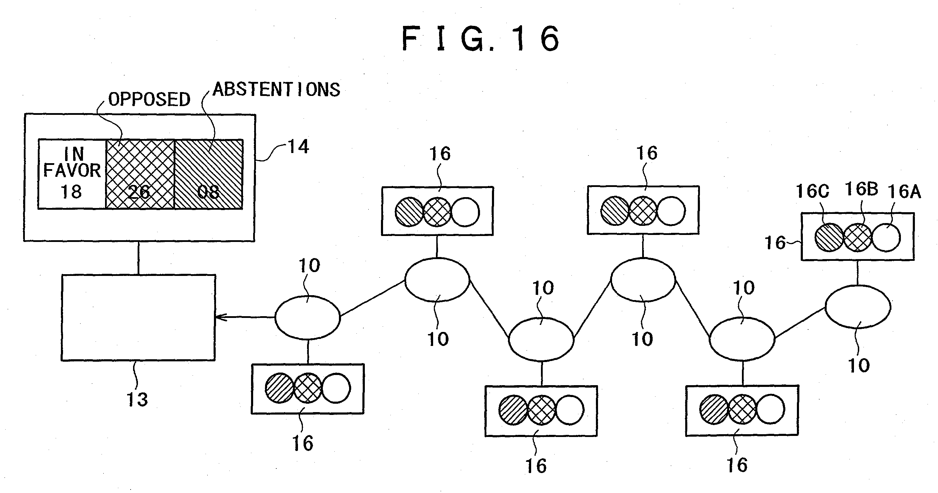

FIG. 16 shows an application in which selected data are added up on an individual data type basis and displayed on the display device 14. In the example shown in FIG. 16, a switch 16 is connected to each terminal apparatus 10 as an input device. The switch 16 has three buttons: "In favor" button 16A, "Opposed" button 16B, and "Abstentions" button 16C.

In the example shown in FIG. 16, selected data is added up on an individual button basis. Since a total value is output from the terminal apparatus 10 at the downstream end, such an output value should be displayed as is. In this case, too, the output value appears on the display device 14 via the computer 13. The presented display example indicates that 18 participants has pressed the "In favor" button 16A, and that 26 participants has pressed the "Opposed" button 16B, and further that 8 participants has pressed the "Abstentions" button 16C.
This selected data display scheme can be used, for instance, with a voting system or alternative questionnaire system.

### (b) Transmission data

### (b-1) Typical transmission data structure

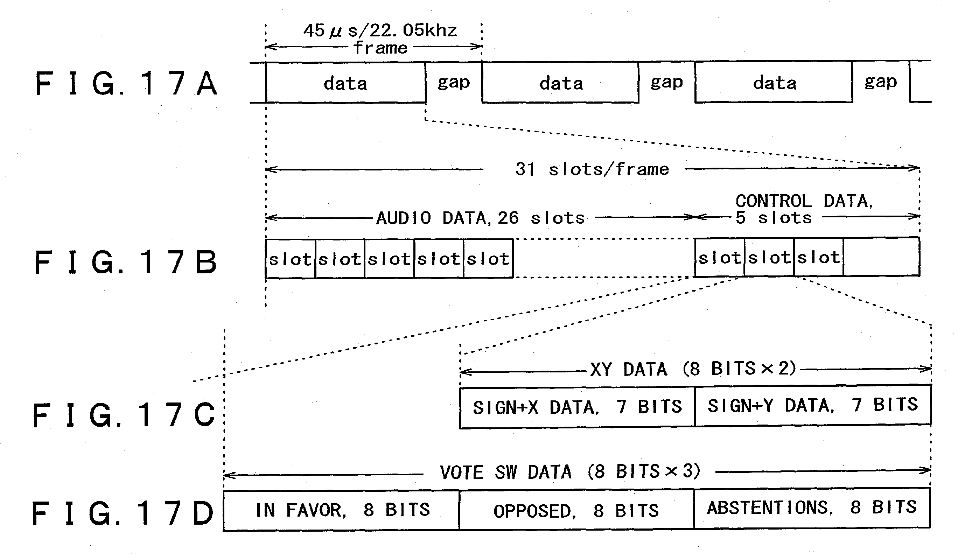

The transmission data structure for use in data transmission will now be described. FIG. 17 shows a typical transmission data structure. In the example shown in FIG. 17, a UART (Universal Asynchronous Receiver Transmitter) is used for transmission.

The UART technology will not be described in detail herein because it is one of the known asynchronous transmission technologies. Briefly, the UART technology provides communication by causing an internal counter to distinguish between 0 and 1 in the bit central phase at fixed time intervals as needed to cover a predetermined number of bits after detection of start bit "0". After the predetermined number of bits have been read, the UART technology starts again to detect the start bit of,the next frame.

The subsequent explanation assumes that the frame frequency fs is 22.05 kHz. It is assumed that a frame includes 31 slots and a gap (data "1"), which has a predetermined length ((A) in FIG. 17). It is also assumed that 26 slots out of a total of 31 slots provide audio data and that the remaining 5 slots provide control data ((B) in FIG. 17). It is assumed that the data length of each slot is 17 bits. Each slot includes a start bit "0" and 16-bit data ds, which follows the start bit.

### (b-2) Control data structure

Information appropriate for the employed system is assigned to each slot of control data. For the first application, for example, each slot is divided into two 8-bit areas, which are respectively allocated for X-value storage and Y-value storage ((C) in FIG. 17). One out of the eight bits is used as a sign bit. The remaining 7 bits constitute absolute value data.

For the third application, for example, two slots are used. The two slots can be divided into four 8-bit areas; however, only three of them are used. The three areas are respectively used for counting the total number of "In favor" button presses, the total number of "Opposed" button presses, and the total number of "Abstentions" button presses ((D) in FIG. 17).

It is needless to say that the number of bits and slots to be assigned to various items of information is determined in accordance with a specific system.

One of the control data slots can also be used for management data. If, for instance, the transmission path can also be used for data distribution, one of the control data slots can be used for reporting the operating mode of the terminal apparatuses 10. With this function, it is possible to set an appropriate mode for all terminal apparatuses by performing a procedure on the master side. Since the operating modes of the terminal apparatuses can be automatically set in this manner, it is possible to avoid an erroneous operation (incorrect totalization operation) that arises out of a terminal apparatus operating mode setup error.

### (c) Terminal device

### (c-1) Overall configuration

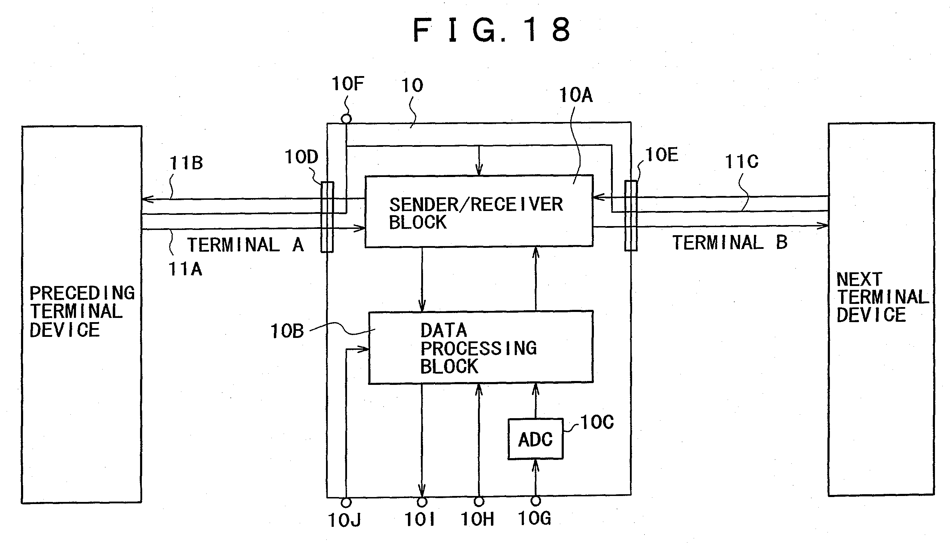

FIG. 18 shows the circuit configuration of a terminal apparatus 10. The terminal apparatus 10 has two main blocks: sender/receiver block 10A and data processing block 10B. The sender/receiver block 10A transmits/receives data and provides automatic loopback control. The data processing block 10B writes control data into the slots and reads control data from the slots. The terminal apparatus 10 uses an AD converter (analog-to-digital converter) 10C for a control data write.

The terminal apparatus has terminal A 10D for connecting to the preceding terminal apparatus and terminal B 10E for connecting to the next terminal device. Terminal A 10D corresponds to aforementioned input/output interface 1A. Terminal B 10E corresponds to aforementioned input/output interface 1B. Each terminal is provided with data transmission signal lines 11A and 11B and a power supply line 11C. Signal line 11A is for a processing path, whereas signal line 11B is for a relay path. The terminal apparatus 10 is provided with a power supply terminal 10F, which is used for power supply.

The terminal apparatus 10 has two terminals for data input: terminal 10G and terminal 10H. Terminal 10G is used for analog value input from various input devices. Terminal 10H is used for digital value input. Terminal 10G is used, for instance, for connecting to a pointing device. Terminal 10H is used, for instance, for connecting to a selector switch. Either or both of these terminals are used depending on the employed system.

The terminal apparatus 10 has one data output terminal 10I. This terminal is used for reception slot data output.

Terminals 10G and 10H are required for non-data master terminal apparatuses. Terminal 10I is required for a data master terminal device. The data master terminal apparatus is positioned at the downstream end of the transmission path and used to output collected data to the outside. On the other hand, the non-data master terminal apparatuses are generally positioned on the upstream side and not at the downstream end of the transmission path. If it is necessary to input data from the terminal at the downstream end, the data master terminal apparatus is provided with terminals 10G and 10H. If it is necessary to output data from terminal apparatuses other than the terminal apparatus at the downstream end, the non-data master terminal apparatuses are provided with terminal 10I.

In the present embodiment, all terminal apparatuses are provided with terminals 10G, 10H, and 10I, and terminal 10J is furnished to define whether a terminal apparatus operates as a data master. As an alternative to the use of terminal 10J, it is possible to employ a scheme for detecting a data input or plug connection to terminals 10G, 10H, and 10I and changing the terminal apparatus operation in accordance with the detection result.

### (c-2) Sender/receiver block

### (C-2-1) Circuit configuration

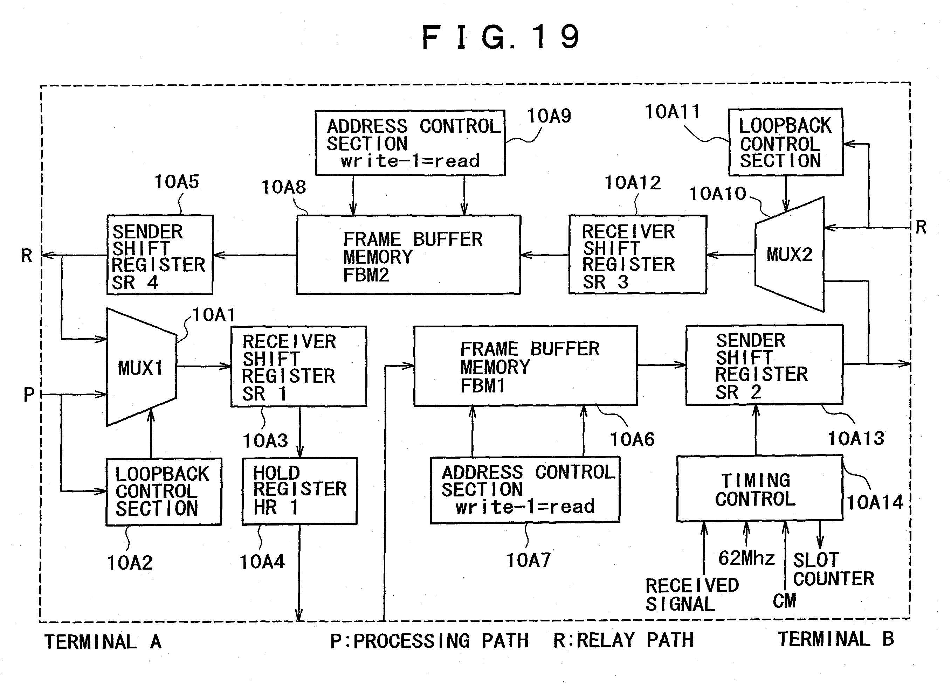

FIG. 19 shows the internal configuration of the sender/receiver block 10A. The UART section is omitted from the figure.

The connection to the preceding terminal apparatus includes a data selector 10A1, a loopback control section 10A2, a receiver shift register 10A3, a hold register 10A4, and a sender shift register 10A5. Processing path input data and relay path output data enter the two inputs of the data selector 10A1.

The loopback control section 10A2 checks whether the data of the processing path P is entered from the preceding terminal apparatus to terminal A. If the processing path data is found, the loopback control section 10A2 selects the input data from the preceding terminal device. If the processing path data is not found, the loopback control section 10A2 selects the data to be transmitted to the preceding terminal device. The result of this check is given to the data selector 10A1 as a control signal. Because of the existence of the data selector 10A1 and loopback control section 10A2, the transmission data can be looped back. The loopback control section 10A2 is, for instance, a monostable multivibrator having a pulse width greater than the frame time. The output from the loopback control section 10A2 is used as a control signal.

The data (processing path) received from terminal A is entered as serial data. Upon start bit detection, the received data is sampled at 5 clock intervals and retained in the reception register 10A3, which is a shift register.

The hold register 10A4 holds 16 bits (slots) of received data at a time and passes the received data to the data processing block 10B as parallel data.

When 31 slots of received data are received, a gap can be detected. If a no-signal (data "1") state continues for more than 100 clocks, it is concluded that a gap is encountered (it is recognized that a frame end is encountered). Therefore, the start bit of the next frame can now be detected. These processing steps are performed by a timing control section 10A14, which will be described later.

The sender shift register 10A5 sequentially serializes the parallel data (relay path) that is read from a frame buffer memory 10A8, and transmits the serialized data in the same frame structure as for the received data. More specifically, the sender shift register 10A5 adds a start bit to the beginning and 181 clocks of a gap (data "1") to the end. The transmission frame start timing varies depending on whether the terminal apparatus 10 operates as a clock master terminal apparatus or a non-clock master terminal device.

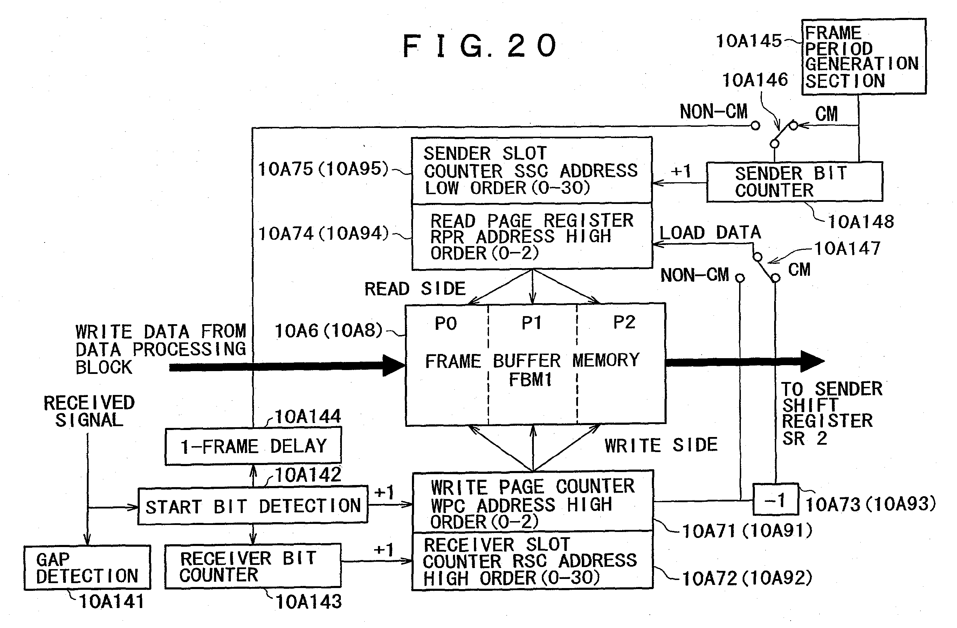

After being passed through the data processing block 10B, the slot data is stored in a frame buffer memory 10A6. As shown in FIG. 20, the frame buffer memory 10A6 is a 2-port memory having a capacity of 3 frames. A 1- to 2-frame phase difference is provided between the read address and write address of the frame buffer memory 10A6.

An address control section 10A7 generates the read and write addresses. In the present embodiment, the read address is determined by subtracting a value equivalent to one frame from the write address. This also holds true for frame buffer memory 10A8 and address control section 10A9, which are provided for the processing route for the relay path.

The connection to the next terminal apparatus includes a data selector 10A10, a loopback control section 10A11, a receiver shift register 10A12, and a sender shift register 10A13. The relay path input data and processing path output data enter the two inputs of the data selector 10A10.

The processing operations performed by data selector 10A10, loopback control section 10A11, receiver shift register 10A12, and sender shift register 10A13 will not be described herein because they are the same as those of data selector 10A1, loopback control section 10A2, receiver shift register 10A3, and sender shift register 10A5, which are described earlier.

The timing control section 10A14 is a circuit that provides control timing for various components within the terminal device. A received signal, 62 MHz clock signal, and clock master/non-clock master changeover signal enter the timing control section 10A14. The 62 MHz clock signal is given from an oscillator that is provided in each terminal device.

If the local terminal apparatus is a clock master, the timing control section 10A14 exercises frame transmission timing control with a frame signal fs that is generated from the 62 MHz clock signal. If, on the other hand, the local terminal apparatus is a non-clock master, frame transmission is delayed by one frame from a received frame (local clocks are counted for timing control purposes). A bit count value that is generated within the timing control section 10A14 is output to a slot counter.

FIG. 20 shows the internal configuration of the timing control section 10A14 and address control section 10A7 (10A9).

The timing control section 10A14 includes a gap detection section 10A141, a start bit detection section 10A142, a receiver bit counter 10A143, a 1-frame delay device 10A144, a frame period generation section 10A145, clock selectors 10A146, 10A147, and a sender bit counter 10A148.

The address control section 10A7 (10A9) includes a write page counter 10A71 (10A91), a receiver slot counter 10A72 (10A92), a 1-frame delay device 10A73 (10A93), a read page register 10A74 (10A94), and a sender slot counter 10A75 (10A95).

Upon receipt of 31 slots of received data, the gap detection section 10A141 is ready for gap detection. If a no-signal (data "1") state continues for more than 100 clocks, the gap detection section 10A141 concludes that a gap is encountered (recognizes that a frame end is encountered). Therefore, the gap detection section 10A141 is ready to detect the start bit of the next frame.

The start bit detection section 10A142 detects a start bit from a received signal. A start bit detection signal is given to the receiver bit counter 10A143, 1-frame delay device 10A144, and write page counter 10A71 (10A91). The high-order address of a write area is updated upon each detection of a start bit.

The receiver bit counter 10A143 uses a start bit as a trigger and counts the number of received bits upward. Whenever the resulting count value is updated (whenever 17 bits (slots) are counted), the low-order address of a write area is updated.

The 1-frame delay device 10A144 is a circuit that gives an operation timing signal to indicate a transmission start time (sender bit counter 10A148). When the terminal apparatus operates as a non-clock master, the output from the 1-frame delay device 10A144 is selected by clock selector 10A146.

In the above instance, the write page counter 10A71 (10A91) gives the same high-order address as for the write area to the read page register 10A74 (10A94) via clock selector 10A147. However, the read timing is delayed by one frame to provide an appropriate phase difference.

The frame period generation section 10A145 is a circuit that provides transmission start timing (operation timing for the sender bit counter 10A148) when the terminal apparatus operates as a clock master.

The sender bit counter 10A148 uses the output from the 1-frame delay device 10A144 or frame period generation section 10A145 as a trigger and counts the number of transmission bits upward. Whenever the resulting count value is updated (whenever 17 bits (slots) are counted), the low-order address of a read area is updated. The high-order address of the read area is updated immediately after the transmission of the last slot.

### (c-3) Data processing block

### (c-3-1) Circuit configuration (write)

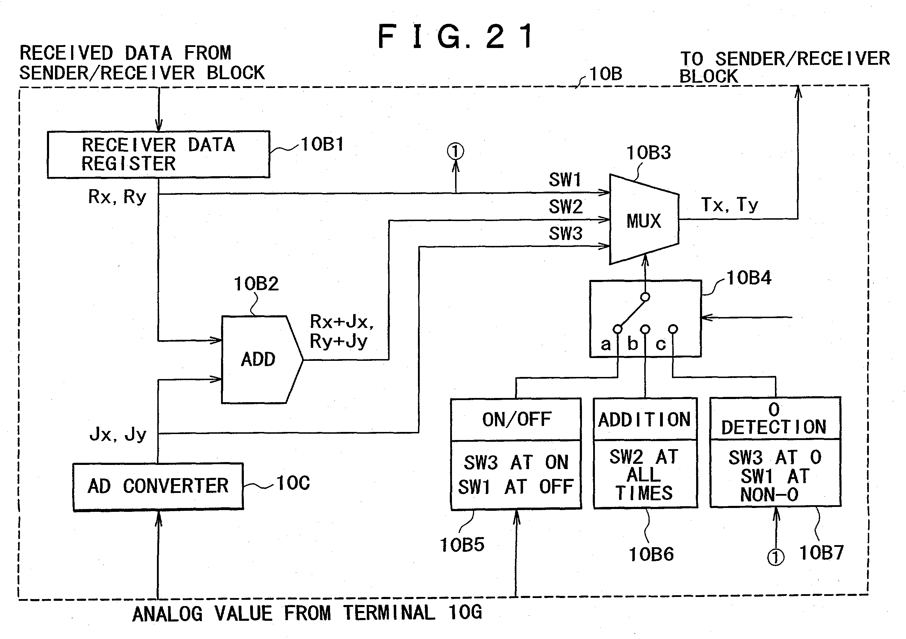

FIG. 21 illustrates a write circuit of the data processing block 10B. The write circuit is a circuit block necessary for a terminal apparatus that operates as a non-data master.

FIG. 21 illustrates a circuit configuration that is suitable for the data processing block 10B, which receives an analog value input from an input device. In the example shown in FIG. 21, the data processing block 10B incorporates an AD converter 10C. Alternatively, the AD converter 10C may be installed outside the data processing block 10B as indicated in FIG. 18.

The write circuit includes a receiver data register 10B1, an adder 10B2, an AD converter 10C, a data selector 10B3, a mode selector switch 10B4, and select memories 10B5, 10B6, 10B7.

The receiver data register 10B1 retains received data for a frame period. In the example shown in FIG. 21, the received data is in two-dimensional form. The adder 10B2 adds up received data Rx, Ry and internal data Jx, Jy. The adder 10B2 performs addition for each parameter. Therefore, the adder 10B2 outputs an X-value addition result Rx + Jx and Y-value addition result Ry + Jy. The values of the internal data Jx, Jy are updated at 1-frame intervals.

The data selector 10B3 is a device that selects one out of three data inputs. The data selector 10B3 includes, for instance, a multiplexer. The three data inputs are received data Rx, Ry, addition result data Rx + Jx, Ry + Jy, and internal data Jx, Jy. The selected data is given to the sender/receiver block 10A as transmission data Tx, Ty.

The mode selector switch 10B4 is a switch for furnishing the data selector 10B3 with operating-mode-specific selection information. The mode selector switch 10B4 is operated either manually or according to management data. In the present embodiment, the mode selector switch 10B4 handles three modes.

Select memories 10B5 through 10B7 are devices that store the terminal information (selection information) about the data selector 10B3, which relate to each operating mode.

For example, select memory 10B5 is for the ON/OFF mode. The ON/OFF mode is a downstream priority control mode. In this mode, the choice between the precedence of internal data output and the passage of received data is made depending on whether the input device is ON or OFF.

Therefore, information is written in select memory 10B5 so as to select input switch 3 when the input device is ON and input switch 1 when the input device is OFF. The information indicating whether the input device is ON (local terminal apparatus preferred) or OFF (remote terminal preferred) is given by the input device separately from the internal data for transmission. Select memory 10B5 incorporates a circuit that determines the ON/OFF status, and then selectively reads information.

Select memory 10B6 is for the totalization mode. The totalization mode outputs the result that is obtained by adding the internal data Jx, Jy to the received data Rx, Ry. In this mode, the output from the adder 10B2 is always selected. The information for selecting input switch 2 is written in select memory 10B6.

Select memory 10B7 is for the zero detection mode. The zero detection mode is an upstream-preferred control mode. In this mode, the choice between received data output and internal data output is made depending on whether the received data is zero data or not. Information is written in select memory 10B7 so as to select input switch 3 when the received data is zero data and input switch 1 when the received data is not zero data. Select memory 10B7 incorporates a circuit that determines whether the received data is zero data or not, and then selectively reads information.

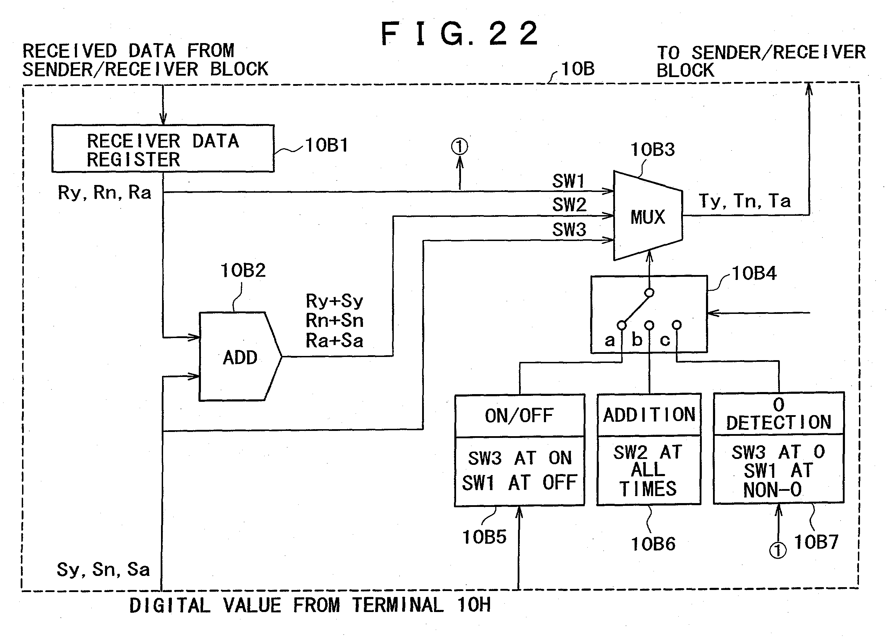

FIG. 22 illustrates a circuit configuration that is suitable for the data processing block 10B, which receives a digital value input from an input device. The configuration of the write circuit shown in this figure is exactly the same as that is shown in FIG. 21 except that the AD converter 10C is not incorporated. This circuit configuration is used to transmit selection data, measurement data, and other numerical data. The subsequent description deals with a case where three-dimensional selection data ("In favor" data, "Opposed" data, and "Abstentions" data) is generated.

In the above instance, the receiver data register 10B1 receives "In favor" data Ry, "Opposed" data Rn, and "Abstentions" data Ra. Each of these received data includes 8 bits. A total of 24 bits are received via two slots.

Meanwhile, "In favor" data Sy, "Opposed" data Sn, and "Abstentions" data Sa are given from an input device as internal data. Each of these internally generated data includes 1 bit. Due to the characteristics of the selection data, one of these internally generated data is "1" while the others are "0".

For each of "In favor" data, "Opposed" data, and "Abstentions" data, the adder 10B2 adds up received data and internal data and outputs Ry + Sy, Rn + Sn, and Ra + Sa as addition results. In this manner, three operating modes are available even when the internal data include digital values. In this instance, output data Ty, Tn, and Ta are generated as a result of selection by the data selector 10B3.

The write circuit configurations described above respectively handle a situation where the internal data includes analog values and a situation where the internal data includes digital values. If a switch is provided to switch between a digital value input and the input of a digital equivalent of an analog value, which is derived from analog-to-digital conversion, one write circuit is enough to handle the above-mentioned two types of input. In this instance, it is possible to effect switching manually or automatically recognize the type of the connected input device to effect switching.

### (c-3-2) Circuit configuration (read)

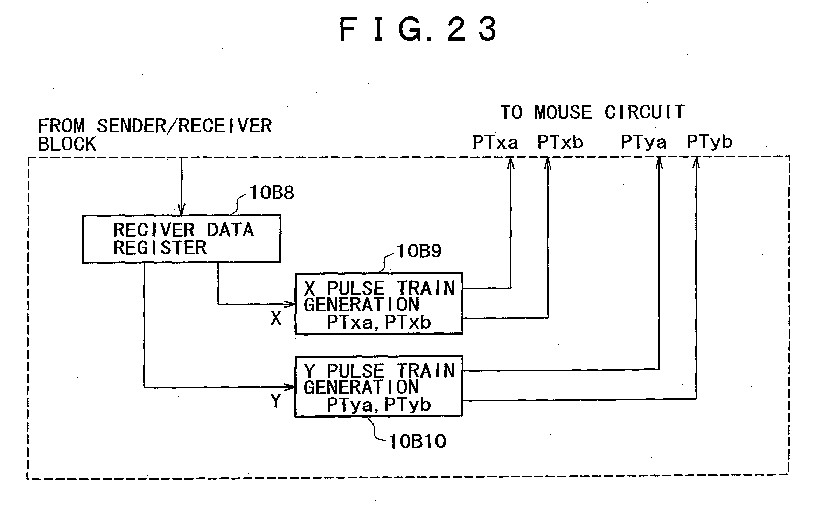

FIG. 23 illustrates a read circuit of the data processing block 10B. The read circuit is a circuit block necessary for a terminal apparatus that operates as a data master. The circuit example shown in FIG. 23 receives displacement data (XY data) from a pointing device and outputs pulse trains PTxa, PTxb and pulse trains PTya, PTyb, which correspond to the displacement data. If the received arithmetic operation results are to be merely output, the use of a receiver data register will suffice.

The read circuit includes a receiver data register 10B8, an X pulse train generation circuit 10B9, and a Y pulse train generation circuit 10B10. The receiver data register 10B8 retains received data for a frame period. The X value, which is contained in the received data, is given to the X pulse train generation circuit 10B9. The Y value, which is also contained in the received data, is given to the Y pulse train generation circuit 10B10.

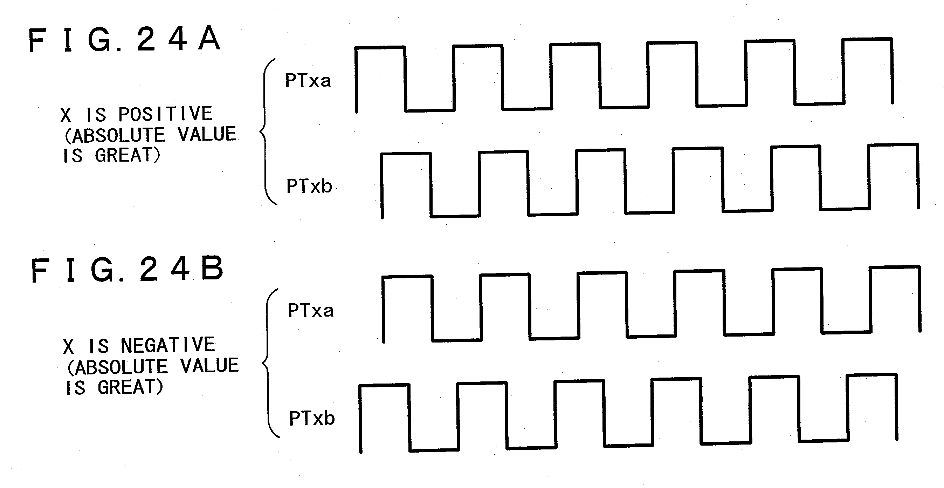

The X pulse train generation circuit 10B9 converts a received X value to two-phase (phase a and phase b) pulse trains PTxa, PTxb. FIGS. 24A and 24B show examples of pulse trains PTxa and PTxb. FIG. 24A shows pulse trains that prevail when the sign of the X value is plus. FIG. 24B shows pulse trains that prevail when the sign of the X value is minus.

As shown in FIGS. 24A and 24B, the positional relationship between phase a and phase b varies with the sign of the X value. More specifically, if the sign of the X value is plus, the X pulse train generation circuit 10B9 generates two-phase pulse trains PTxa and PTxb, which indicate that phase a leads phase b. If, on the other hand, the sign of the X value is minus, the X pulse train generation circuit 10B9 generates two-phase pulse trains PTxa and PTxb, which indicate that phase b leads phase a.

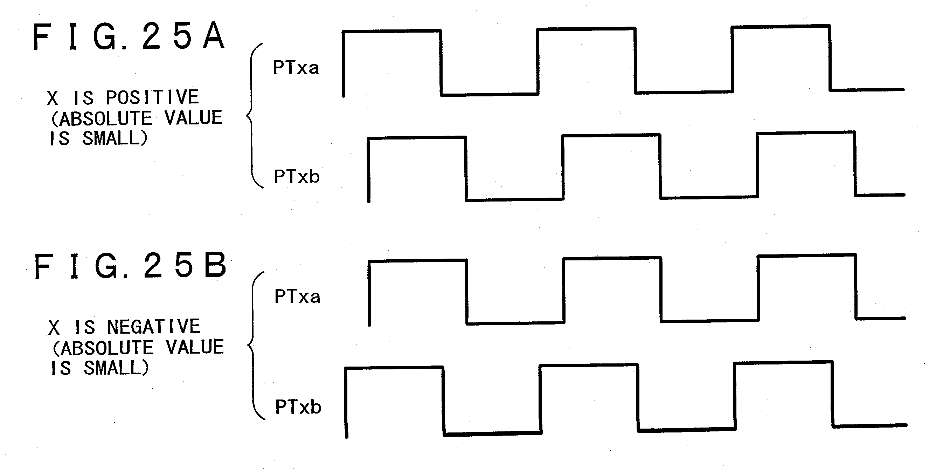

Further, the X pulse train generation circuit 10B9 varies the density (pulses/second) of a pulse train that is generated according to the absolute value of the X value. FIGS. 25A and 25B show pulse trains that are generated when the absolute value of the X value is small. FIGS. 24A and 24B correspond to a case where the absolute value of the X value is great. As described above, the X pulse train generation circuit 10B9 generates two-phase pulse trains in accordance with the sign and absolute value of the X value.

The Y pulse train generation circuit 10B10 converts a received Y value to two-phase (phase a and phase b) pulse trains PTya, PTyb. This circuit performs the same operations as the X pulse train generation circuit 10B9.

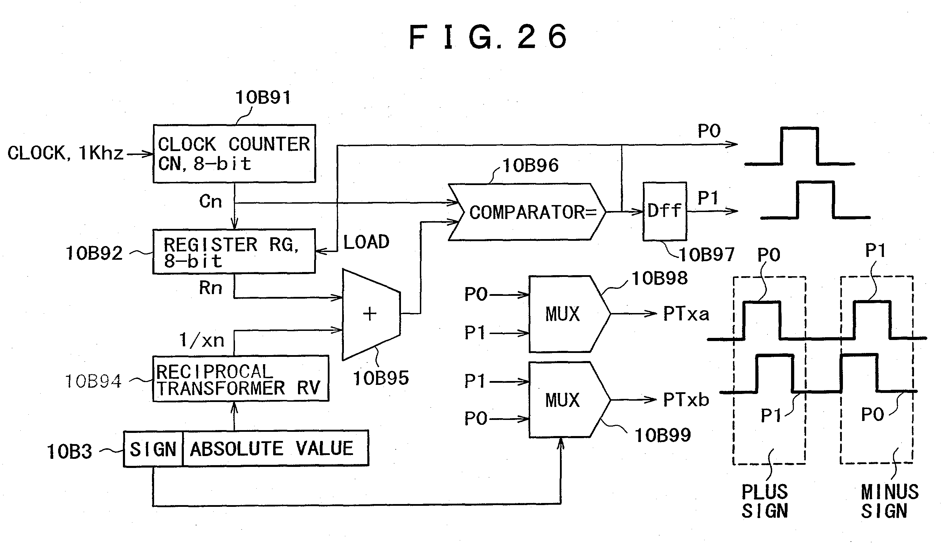

FIG. 26 illustrates the internal configurations of the above pulse train generation circuits. The circuit shown in FIG. 26 is an example of the X pulse train generation circuit 10B9. The X pulse train generation circuit 10B9 includes a clock counter 10B91, a counter register 10B92, an X-value register 10B93, a reciprocal transformer 10B94, an adder 10B95, a comparator 10B96, a delay device 10B97, and pulse selectors 10B98, 10B99.

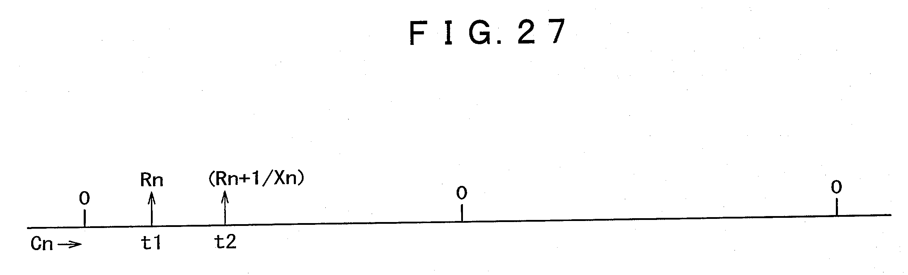

The clock counter 10B91 is driven by a 1 kHz clock. The count reached by this counter resets at the end of each frame period. FIG. 27 indicates that the count Cn moves rightward with time.

The counter register 10B92 acquires and retains the count Rn that prevails at the time of the last load signal input. This count Rn provides the reference position for timing the next load signal generation.

The X-value register 10B93 retains the X value that is acquired from the receiver data register 1088. The sign of the X value is output to the pulse selectors 10B98, 10B99 for use in phase relationship changeover. The absolute value of the X value is output to the reciprocal transformer 10B94 for use in pulse density setup.

The reciprocal transformer 10B94 is an arithmetic operation circuit that determines and outputs the reciprocal 1/Xn of the absolute value of the X value.

The adder 10B95 is an arithmetic operation circuit that adds the reciprocal 1/Xn to the count Rn prevailing at the time of the last loading and outputs the count Rn + 1/Xn for timing the next pulse output. For example, the greater the absolute value Xn of the X value, the smaller its reciprocal and thus the shorter the pulse output intervals. On the other hand, the smaller the absolute value Xn of the X value, the greater its reciprocal and thus the longer the pulse output intervals.

The comparator 10B96 compares the count Rn + 1/Xn given by the adder 10B95 against the count Cn reached by the clock counter 10B91, and outputs pulse P0 the moment they coincide with each other. The resulting output pulse P0 is given to the aforementioned counter register 10B92 as a load signal.

The delay device 10B97 delays pulse P0 by a predetermined length of time. The delay device 10B97 outputs pulse P1 whose phase is delayed by a predetermined amount from pulse P0.

Pulse selectors 10B98 and 10B99 are multiplexers that input a pair of pulses P0, P1 and outputs either of these pulses in accordance with the sign data of the X value. Pulse selector 10B98 corresponds to phase a pulse PTxa, whereas pulse selector 10B99 corresponds to phase b pulse PTxb.

The relationship between the inputs of pulses P0 and P1 to pulse selectors 10B98 and 10B99 is set so that the phase of one pulse is opposite to that of the other. Therefore, even when the same signed values are given, a two-phase pulse output is generated so that the phase of one pulse is opposite to that of the other. If the sign is plus in a case shown in FIG. 26, pulse selector 10B98 outputs pulse P0 and pulse selector 10B99 outputs pulse P1. If the sign is minus, on the other hand, the pulses are output so that the phase of one pulse is opposite to that of the other.

The relationship between the inputs of pulses P0 and P1 to pulse selectors 10B98 and 10B99 may be set so that the phase of one pulse is the same as that of the other. For such setup, the sign of one of the signed values to be given to pulse selectors 10B98 and 10B99 should be reversed. This produces the same result as provided by the circuit configuration shown in FIG. 26.

### (d) System operations

The processing operations that the terminal apparatuses perform in accordance with the operating status of the present embodiment of a system will now be described.

### (d-1) Initial operations (including an initial operation that is performed upon a reset after a wiring change or in the event of a failure)

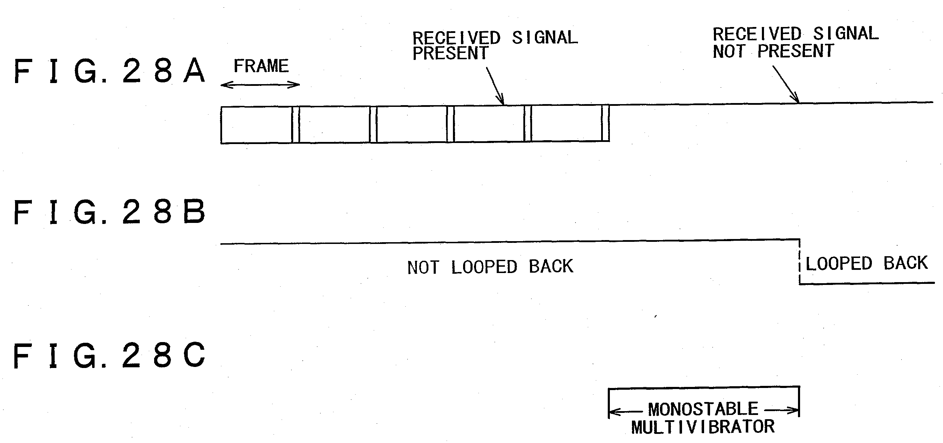

In a system in which the terminal apparatuses 10 are series-connected with cables, an automatic path loopback operation is performed upon power ON. Therefore, a daisy chain is logically formed. As described earlier, this process is performed by loopback control sections 10A2 and 10A11. FIG. 28 illustrates the concept of loop back control.

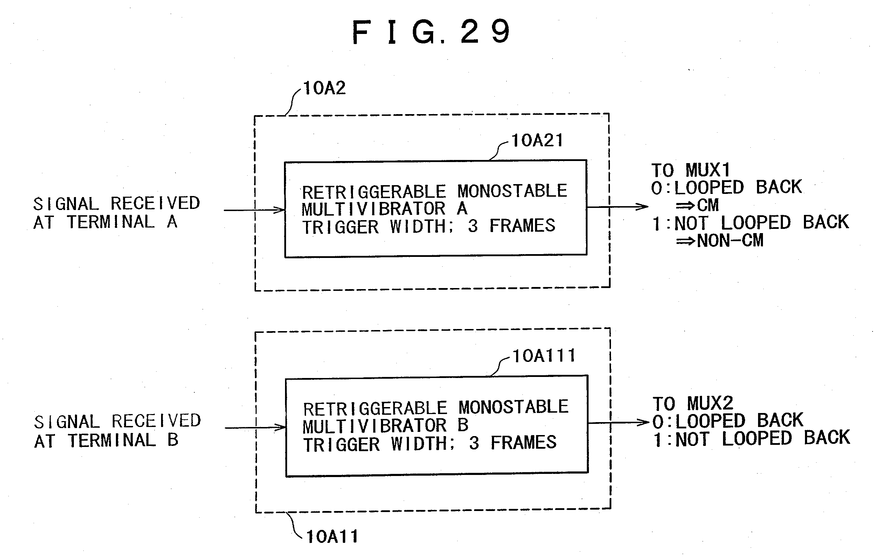

As indicated in FIG. 29, the above-mentioned loopback control is exercised by monostable multivibrators 10A21 and 10A111, which have a pulse width greater than the frame time. The present embodiment assumes that the employed monostable multivibrators have a 3-frame width.

If the received signals for three or more frames are lost, the outputs of monostable multivibrators 10A21 (and 10A111 (B) in Fig. 28) change from "1" to "0" as indicated by (A) in FIG. 28 so that data selector 10A1 (10A10) is controlled to cause a path loopback at the associated terminal device. Thus, the aforementioned daisy chain is automatically set.

As described above, a system having a loop-shaped transmission path can be constructed simply by series-connecting the terminal apparatuses 10. Therefore, when a terminal apparatus at an arbitrary connection position is set as a data master, the data master can collect data that is transmitted while a terminal apparatus next to the data master is regarded as a terminal apparatus at the upstream end.

In the above instance, the data processing block 10B at a terminal that is defined as a non-data master performs operations for allowing the data received from the preceding terminal apparatus to pass, adding up received data and internal data, and replacing received data with internal data. These operations are as described earlier.

The transmission/reception operations performed by the sender/receiver blocks of the terminal apparatuses will be described below. Each terminal apparatus constituting the system is a clock master terminal device, which gives a reference clock to the other terminal apparatuses, or non-clock master terminal, which operates in compliance with the reference clock. The clock master terminal apparatus can be set independently of the data master terminal device.

### (d-2) Clock master terminal apparatus operations

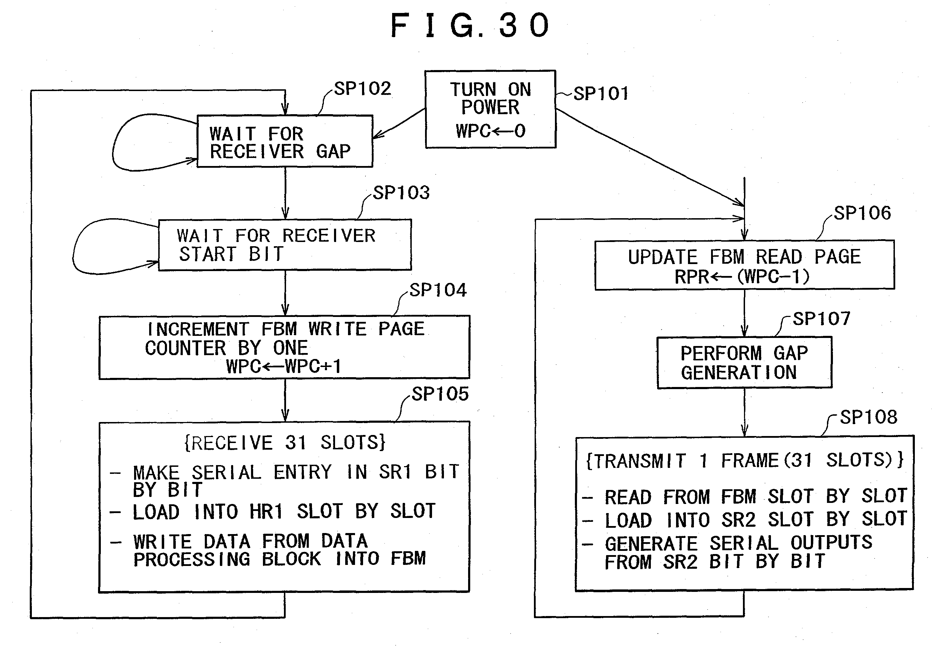

The processing operations performed by a clock master terminal apparatus will now be described. FIG. 30 shows operating state transitions. First of all, when the power turns ON, the write page counter WPC is set to data "0" (step SP101). Subsequently, the data write system and data read system perform separate operations. The left-hand side of FIG. 30 shows write system operations, whereas the right-hand side shows read system operations.

The write system operations will now be described. When the power turns ON, the timing control section 10A14 waits for a receiver gap (step SP102). This operation is repeated until a receiver gap is received. When a receiver gap is detected, the timing control section 10A14 waits for a start bit (step SP103). This operation is also repeated until a start bit is detected.

The address control section 10A7 is informed of a start bit detection so that the write page counter is incremented by one (step SP104). Next, step SP105 is performed to receive 31 slots of data. In this instance, the received data is serially transferred to the receiver shift register 10A3 bit by bit and written into the hold register 10A4 slot by slot. The transmission data processed by the data processing block 10B is then written into the frame buffer memory 10A6 (10A8). The sequence of the above operations is repeated for each frame.

The read system operations will now be described. In the read system, the timing control section 10A14 updates the read page one page before the write page (step SP106), and then generates a gap as needed for a clock (step SP107).

Next, step SP108 is performed to transmit 31 slots of data. In this instance, the transmission data is read from the frame buffer memory 10A6 (10A8) slot by slot and then transferred to the sender shift register 10A13 slot by slot. Next, the transmission data is serially transferred bit by bit from the sender shift register 10A13. The sequence of the above operations is repeated for each frame.

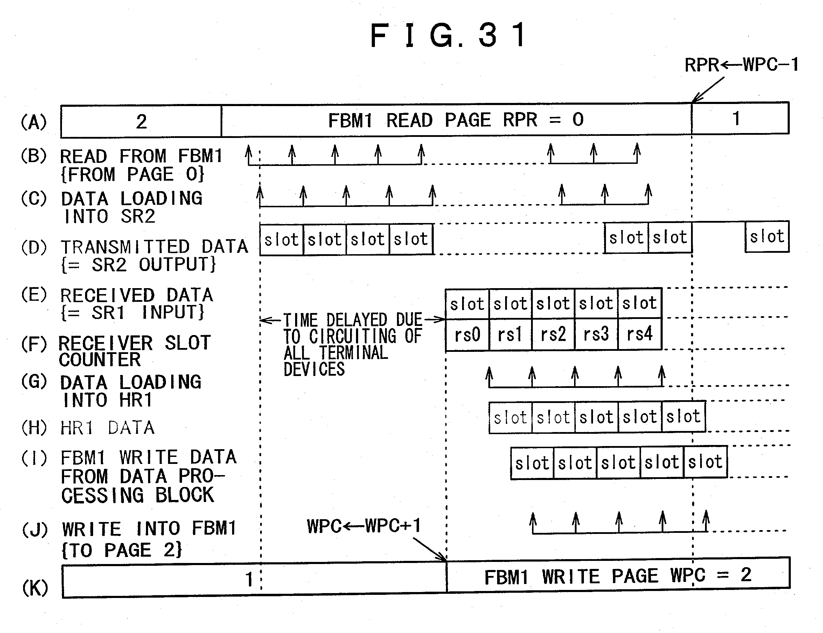

FIG. 31 is a timing diagram that illustrates the above processing operations. The aforementioned read system operation timing is indicated by (A) to (D) in FIG. 31. The aforementioned write system operation timing is indicated by (E) to (K) in FIG. 31. As indicated in the figure, a phase difference of at least one frame is provided between the data write area and data read area.

### (d-3) Non-clock master terminal apparatus operations

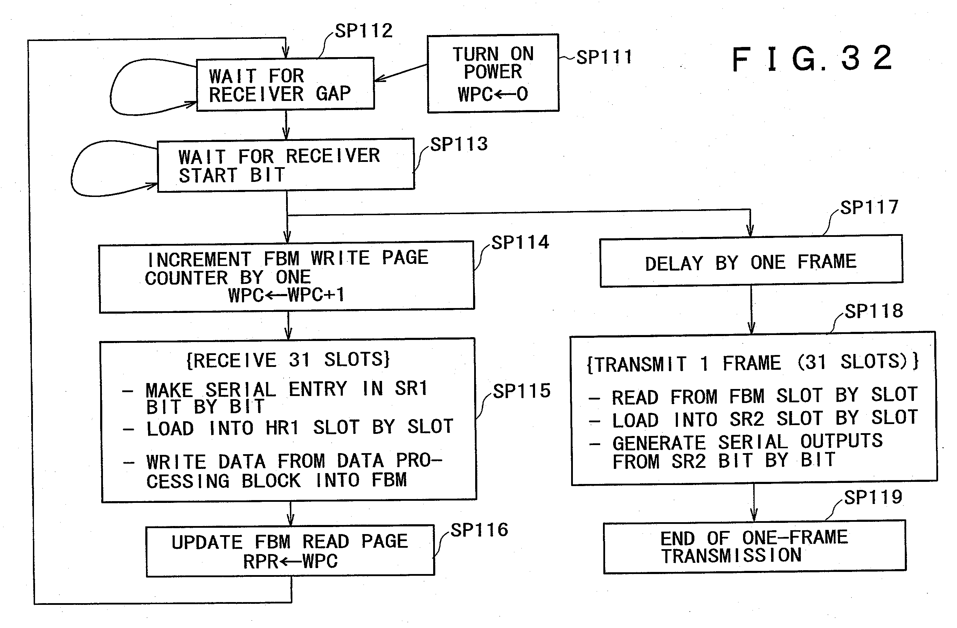

The processing operations performed by a non-clock master terminal apparatus will now be described. FIG. 32 shows operating state transitions. First of all, when the power turns ON, the write page counter WPC is set to "0" (step SP111). Step SP112 is then followed to wait for a receiver gap. This operation is repeated until a receiver gap is received. When a receiver gap is detected, the timing control section 10A14 waits for a start bit (step SP113). This operation is also repeated until a start bit is detected.

The non-clock master terminal operation is then separated into the write and read system operations. In FIG. 32, the left-hand side illustrates the write system operations, whereas the right-hand side illustrates the read system operations. First of all, the write system operations will be described. In the write system, a start bit detection is given to the address control section 10A7 so that the write page counter is incremented by one (step SP114).

Step SP115 is then followed to receive 31 slots of data. In this instance, received data is serially transferred to the receiver shift register 10A3 bit by bit and then written into the hold register 10A4 slot by slot. Next, the transmission data processed by the data processing block 10B is written into the frame buffer memory 10A6 (10A8). Step SP116 is then performed to update the read page of the frame buffer memory. The sequence of the above operations is repeated for each frame.

The read system operations will now be described. In the read system, a start bit detection signal is delayed by one frame (step SP117). Step SP118 is then performed with the delay detection signal timing to start transmitting 31 slots of data. In this instance, the transmission data is read from the frame buffer memory 10A6 (10A8) slot by slot, and then transferred to the sender shift register 10A13 slot by slot. Next, the transmission data is serially transferred bit by bit from the sender shift register 10A13. A one-frame transmission sequence is now terminated (step SP119).

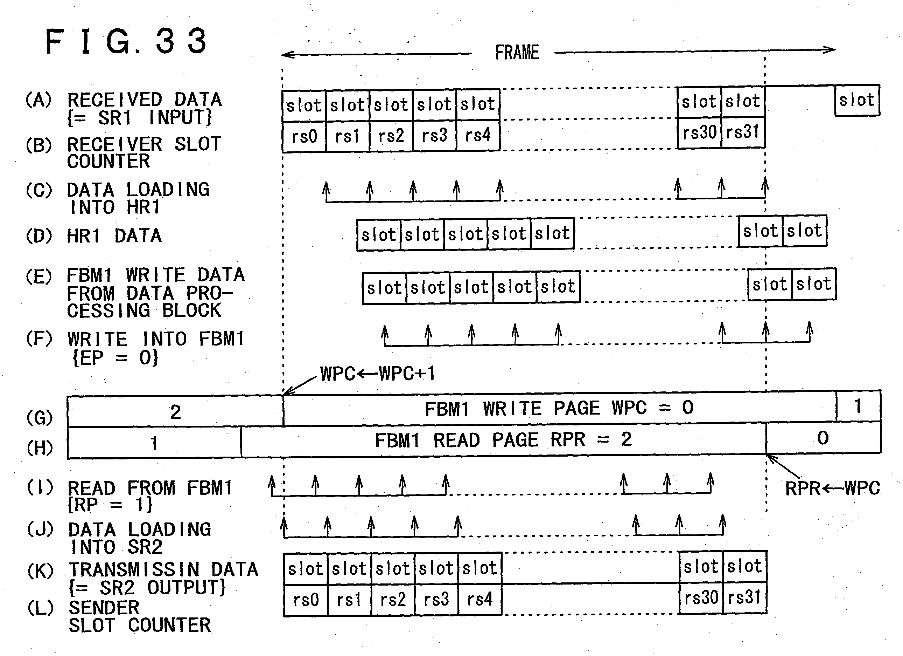

FIG. 33 is a timing diagram that illustrates the above processing operations. The aforementioned write system operation timing is indicated by (A) to (G) in FIG. 33. The aforementioned read system operation timing is indicated by (H) to (L) in FIG. 33. As indicated in the figure, a phase difference of at least one frame is provided between the data write area and data read area.

### (d-4) Application-specific operations

Finally, typical application-specific operations will be briefly described.

### (d-4-1) Upstream-preferred type data transfer

The use of the transmission system in an upstream-preferred transfer mode will now be described. In this case, the mode selector switch 10B4 (FIGS. 22 and 23) of a non-data master terminal apparatus is connected to select memory 10B7.

In a non-data master terminal device, the data processing block 10B determines whether received data is zero data or not. If zero data is received, the data processing block 10B selects input switch 3 of the data selector 10B3 and gives the internal data to the sender/receiver block 10A. If, on the other hand, non-zero data is received, the data processing block 10B selects input switch 1 of the data selector 10B3 and gives the received data to the sender/receiver block 10A.

The sender/receiver block 10A writes transmission data in a predetermined slot with the aforementioned timing to transmit it to the next terminal apparatus 10. The above operation is repeated by each terminal apparatus to enter the data into the data master terminal device.

The data master terminal outputs the received data in a signal format that can be processed by the output device. If, for instance, the received data is to be directly output to a monitor or other similar display device, it is output in a video signal format. If the received data is to be used for a pseudo-mouse signal, it is output in a signal format that is suitable for the aforementioned mouse circuit.

### (d-4-2) Downstream-preferred type data transfer

The use of the transmission system in a downstream-preferred transfer mode will now be described. In this case, the mode selector switch 10B4 (FIGS. 22 and 23) of a non-data master terminal apparatus is connected to select memory 10B5.

In a non-data master terminal device, the data processing block 10B determines whether the input device is ON. If the input device is ON, the data processing block 10B selects input switch 3 of the data selector 10B3 and gives the internal data to the sender/receiver block 10A. If, on the other hand, the input device is OFF, the data processing block 10B selects input switch 1 of the data selector 10B3 and gives the received data to the sender/receiver block 10A.

The sender/receiver block 10A writes transmission data in a predetermined slot with the aforementioned timing to transmit it to the next terminal apparatus 10. The above operation is repeated by each terminal apparatus to enter the data into the data master terminal device.

The data master terminal outputs the received data in a signal format that can be processed by the output device. If, for instance, the received data is to be directly output to a monitor or other similar display device, it is output in a video signal format. If the received data is to be used for a pseudo-mouse signal, it is output in a signal format that is suitable for the aforementioned mouse circuit.

### (d-4-3) Arithmetic operation result transmission

The use of the transmission system in an arithmetic operation result transmission type transfer mode will now be described. In this case, the mode selector switch 10B4 (FIGS. 22 and 23) of a non-data master terminal apparatus is connected to select memory 10B6.

In a non-data master terminal device, the data processing block 10B selects input switch 2 of the data selector 10B3. The received data input into the data processing block 10B is given to the adder 10B2 and added to the internal data. If any other arithmetic operation is performed, a processing block appropriate for the arithmetic operation operates on the received data and internal data.

The arithmetic operation result is given to the sender/receiver block 10A via the data selector 10B3. The sender/receiver block 10A writes transmission data into a predetermined slot with the aforementioned timing to transmit it to the next terminal apparatus 10. The above operation is repeated by each terminal apparatus to enter the data into the data master terminal device.

The data master terminal outputs the received data in a signal format that can be processed by the output device. If, for instance, the received data is to be directly output to a monitor or other similar display device, it is output in a video signal format. If the received data is to be used for a pseudo-mouse signal, it is output in a signal format that is suitable for the aforementioned mouse circuit.

### (e) Effects of the Present Embodiment

When terminal apparatuses according to the present embodiment are used as described above, data transmission can be achieved with a minimum required transmission band no matter how many terminal apparatuses constitute the system. Further, since necessary arithmetic operations are performed by each terminal apparatus positioned in the transmission path, the data master can receive only the arithmetic operation results. Furthermore, when the terminal apparatuses according to the present embodiment are used, a terminal apparatus placed at an arbitrary connection position can be set as a data mater; therefore, it is possible to achieve system establishment without regard to the limitations imposed by installation site requirements.

### (f) Alternative embodiments

The description of the foregoing embodiment assumes that the transmission data slots include audio data and control data. Alternatively, however, the transmission data slots may include control data only. Further, the description of the foregoing embodiment assumes that non-audio data is transmitted as control data. Alternatively, however, non-audio data may be transmitted with audio data slots. Furthermore, the description of the foregoing embodiment mainly deals with non-audio data transmission. However, audio data, video data, and text data can also be transmitted in a manner described in conjunction with the foregoing embodiment. For example, embodiments of the present invention can also be applied to a situation where the audio data, video data, or text data about only one speaker is transmitted in the upstream-preferred mode of the transmission system.

In the foregoing embodiment, five slots are allocated for the transmission of control data. However, the present invention is not limited to the allocation of five slots for control data transmission. Further, the description of the foregoing embodiment assumes that one frame includes 31 slots. However, the number of slots constituting a frame may be changed depending on the employed system.

Various respective aspects and features of the invention are defined in the appended claims. Features from the dependent claims may be combined with features of the independent claims as appropriate and not merely as explicitly set out in the claims.

## Claims

1. A data transmission system comprising:
a plurality of terminal apparatuses for transmitting significant data unidirectionally so that a terminal apparatus at the downstream end of a transmission path collects the significant data,
each of said terminal apparatuses including:
a data detection section for detecting whether or not significant data written at an other terminal apparatus located toward the upstream side of the transmission path is received; and
a data selection section for transferring the significant data as is to a downstream terminal apparatus when the reception of the significant data is detected or outputting significant data generated within the terminal apparatus to a downstream terminal apparatus when the reception of the significant data is not detected.

2. A data transmission system comprising:
a plurality of terminal apparatuses for transmitting significant data unidirectionally so that a terminal apparatus at the downstream end of a transmission path collects the significant data,
each of said terminal apparatuses including:
a data detection section for detecting whether or not significant data generated within the terminal apparatus exists; and
a data selection section for replacing received significant data with the significant data generated within the terminal apparatus and outputting the resulting significant data to a downstream terminal apparatus when the existence of the significant data generated within the terminal apparatus is detected or transferring the received significant data as is to a downstream terminal apparatus when the existence of the significant data generated within the terminal apparatus is not detected.

3. A data transmission system comprising:
a plurality of terminal apparatuses for transmitting significant data unidirectionally so that a terminal apparatus at the downstream end of a transmission path collects the significant data,
each of said terminal apparatuses including a data operation section for causing an operator to act on received significant data and significant data generated within the terminal apparatus and outputting the obtained operation result to a downstream terminal device.

4. The data transmission system according to claim 3, wherein said data operation section operates on significant data on an individual data type basis.

5. The data transmission system according to claim 3, wherein said data operation section operates on significant data on an individual terminal apparatus group basis.

6. The data transmission system according to claim 3, wherein said data operation section adds significant data generated within the terminal apparatus to received significant data and outputs the addition result.

7. The data transmission system according to claim 1, wherein, when said plurality of terminal apparatuses are connected via the transmission path in such a manner as to form a loop, an arbitrarily selected one of said plurality of terminal apparatuses is regarded as being positioned at the downstream end of the transmission path; and wherein significant data is transmitted on the presumption that a terminal apparatus positioned next to the selected terminal apparatus is positioned at the upstream end of the transmission path.

8. The data transmission system according to claim 2, wherein, when said plurality of terminal apparatuses are connected via the transmission path in such a manner as to form a loop, an arbitrarily selected one of said plurality of terminal apparatuses is regarded as being positioned at the downstream end of the transmission path; and wherein significant data is transmitted on the presumption that a terminal apparatus positioned next to the selected terminal apparatus is positioned at the upstream end of the transmission path.

9. The data transmission system according to claim 3, wherein, when said plurality of terminal apparatuses are connected via the transmission path in such a manner as to form a loop, an arbitrarily selected one of said plurality of terminal apparatuses is regarded as being positioned at the downstream end of the transmission path; and wherein significant data is transmitted on the presumption that a terminal apparatus positioned next to the selected terminal apparatus is positioned at the upstream end of the transmission path.

10. A terminal apparatus comprising:
a data detection section for detecting whether or not significant data written at an other terminal apparatus located toward the upstream side of a transmission path is received; and
a data selection section for transferring the significant data as is to a downstream terminal apparatus when the reception of the significant data is detected or outputting significant data generated within the terminal apparatus to a downstream terminal apparatus when the reception of the significant data is not detected.

11. A terminal apparatus comprising:
a data detection section for detecting whether or not significant data generated within the terminal apparatus exists; and
a data selection section for replacing received significant data with the significant data generated within the terminal apparatus and outputting the resulting significant data to a downstream terminal apparatus when the existence of the significant data generated within the terminal apparatus is detected or transferring the received significant data as is to a downstream terminal apparatus when the existence of the significant data generated within the terminal apparatus is not detected.

12. A terminal apparatus comprising:
a data operation section for causing an operator to act on received significant data and significant data generated within the terminal apparatus and outputting the obtained operation result to a downstream terminal device.

13. The terminal apparatus according to claim 12, wherein said data operation section operates on significant data on an individual data type basis.

14. The terminal apparatus according to claim 12, wherein said data operation section operates on significant data on an individual terminal apparatus group basis.

15. The terminal apparatus according to claim 12, wherein said data operation section adds significant data generated within the terminal apparatus to received significant data and outputs the addition result.

16. The terminal apparatus according to claim 10, further comprising:
a first input/output interface, which includes a data input section for a processing path and a data output section for a relay path;
a second input/output interface, which includes a data output section for a processing path and a data input section for a relay path;
a first path selection section for monitoring said data input section for a processing path, detecting whether a processing path input has been output from an other terminal device, selecting and transferring the processing path when the processing path input is detected, and selecting a relay path given to the data output section for a relay path and looping the selected relay path back to the processing path side when a processing path input is not detected; and
a second path selection section for monitoring said data input section for a relay path, detecting whether a relay path input has been output from an other terminal device, selecting and transferring the relay path when the relay path input is detected, and selecting a processing path given to the data output section for a processing path and looping the selected processing path back to the relay path side when a relay path input is not detected.

17. The terminal apparatus according to claim 11, further comprising:
a first input/output interface, which includes a data input section for a processing path and a data output section for a relay path;
a second input/output interface, which includes a data output section for a processing path and a data input section for a relay path;
a first path selection section for monitoring said data input section for a processing path, detecting whether a processing path input has been output from an other terminal device, selecting and transferring the processing path when the processing path input is detected, and selecting a relay path given to the data output section for a relay path and looping the selected relay path back to the processing path side when a processing path input is not detected; and
a second path selection section for monitoring said data input section for a relay path, detecting whether a relay path input has been output from an other terminal device, selecting and transferring the relay path when the relay path input is detected, and selecting a processing path given to the data output section for a processing path and looping the selected processing path back to the relay path side when a relay path input is not detected.

18. The terminal apparatus according to claim 12, further comprising:
a first input/output interface, which includes a data input section for a processing path and a data output section for a relay path;
a second input/output interface, which includes a data output section for a processing path and a data input section for a relay path;
a first path selection section for monitoring said data input section for a processing path, detecting whether a processing path input has been output from an other terminal device, selecting and transferring the processing path when the processing path input is detected, and selecting a relay path given to the data output section for a relay path and looping the selected relay path back to the processing path side when a processing path input is not detected; and
a second path selection section for monitoring said data input section for a relay path, detecting whether a relay path input has been output from an other terminal device, selecting and transferring the relay path when the relay path input is detected, and selecting a processing path given to the data output section for a processing path and looping the selected processing path back to the relay path side when a relay path input is not detected.

19. A data transmission method for use with a data transmission system, comprising:
a plurality of terminal apparatuses for transmitting significant data unidirectionally so that a terminal apparatus at the downstream end of a transmission path collects the significant data,
each of said terminal apparatuses including the steps of:
detecting whether or not significant data written at an other terminal apparatus located toward the upstream side of the transmission path is received; and
transferring the significant data as is to a downstream terminal apparatus when the reception of the significant data is detected or outputting significant data generated within the terminal apparatus to a downstream terminal apparatus when the reception of the significant data is not detected.

20. A data transmission method for use with a data transmission system, comprising:
a plurality of terminal apparatuses for transmitting significant data unidirectionally so that a terminal apparatus at the downstream end of a transmission path collects the significant data,
each of said terminal apparatuses including the steps of:
detecting whether significant data generated within the terminal apparatus exists; and
replacing received significant data with the significant data generated within the terminal apparatus and outputting the resulting significant data to a downstream terminal apparatus when the existence of the significant data generated within the terminal apparatus is detected or transferring the received significant data as is to a downstream terminal apparatus when the existence of the significant data generated within the terminal apparatus is not detected.

21. A data transmission method for use with a data transmission system, comprising:
a plurality of terminal apparatuses for transmitting significant data unidirectionally so that a terminal apparatus at the downstream end of a transmission path collects the significant data,
each of said terminal apparatuses including the step of causing an operator to act on received significant data and significant data generated within the terminal apparatus and outputting the obtained operation result to a downstream terminal device.

22. The data transmission method according to claim 21, wherein significant data is operated on an individual data type basis.

23. The data transmission method according to claim 21, wherein significant data is operated on an individual terminal apparatus group basis.

24. The data transmission method according to claim 21, wherein significant data generated within the terminal apparatus is added to received significant data to output the addition result.

25. A computer-readable recording medium storing a program for causing a computer to perform the functions for:
detecting whether or not significant data written at an other terminal apparatus located toward the upstream side of a transmission path is received; and
transferring the significant data as is to a downstream terminal apparatus when the reception of the significant data is detected or outputting significant data generated within the terminal apparatus to a downstream terminal apparatus when the reception of the significant data is not detected.

26. A computer-readable recording medium storing a program for causing a computer to perform the functions for:
detecting whether significant data generated within the terminal apparatus exists; and
replacing received significant data with the significant data generated within the terminal apparatus and outputting the resulting significant data to a downstream terminal apparatus when the existence of the significant data generated within the terminal apparatus is detected or transferring the received significant data as is to a downstream terminal apparatus when the existence of the significant data generated within the terminal apparatus is not detected.

27. A computer-readable recording medium storing a program for causing a computer to perform the function for:
causing an operator to act on received significant data and significant data generated within the terminal apparatus and outputting the obtained operation result to a downstream terminal device.

28. The recording medium according to claim 27, wherein significant data is operated on an individual data type basis.

29. The recording medium according to claim 27, wherein significant data is operated on an individual terminal apparatus group basis.

30. The recording medium according to claim 27, wherein significant data generated within the terminal apparatus is added to received significant data to output the addition result.
